## Europäisches Patentamt
## European Patent Office
## Office européen des brevets

(19)

(11) Veröffentlichungsnummer: **0 097 346**
**B1**

(12)

# EUROPÄISCHE PATENTSCHRIFT

(45) Veröffentlichungstag der Patentschrift:
**11.05.88**

(51) Int. Cl.⁴: **B 23 Q 27/00**

(21) Anmeldenummer: **83105955.5**

(22) Anmeldetag: **18.06.83**

(54) Verfahren zur Herstellung von Werkstücken mit polygonaler Aussen- und/oder Innenkontur und Vorrichtungen zur Durchführung des Verfahrens.

(30) Priorität: **19.06.82 DE 3222991**

(43) Veröffentlichungstag der Anmeldung:
**04.01.84 Patentblatt 84/1**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
CH - A - 330 925
DE - A - 2 357 005
DE - B - 1 012 802
DE - B - 1 050 149
DE - C - 222 861
DE - C - 506 943
DE - C - 513 327
DE - C - 680 311
DE - C - 708 743
FR - A - 862 890
FR - A - 933 254
FR - A - 1 531 602
FR - A - 2 130 484
FR - A - 2 223 120
SU - A - 738 771
US - A - 3 080 795
US - A - 3 595 108
US - A - 4 124 927

(73) Patentinhaber: **Ley, Hans, Dr. Wirtz-Strasse 30,
D-5203 Much (DE)**

(72) Erfinder: **Ley, Hans, Dr. Wirtz-Strasse 30, D-5203 Much
(DE)**
Erfinder: **Schmidt, Manfred, Krahmerweg 11,
D-5203 Much (DE)**

(74) Vertreter: **Langmaack, Jürgen, Dipl.-Ing. et al,
Patentanwälte Maxton . Maxton . Langmaack
Goltsteinstrasse 93 Postfach 51 08 06,
D-5000 Köln 51 (DE)**

ACTORUM AG

**Beschreibung**

Die Erfindung betrifft ein Verfahren zur Herstellung von Werkstücken mit polygonaler Aussen- und/oder Innenkontur, vorzugsweise durch spanabhebende Bearbeitung, wobei das zu bearbeitende Werkstück um eine ortsfeste Drehachse mit konstanter Geschwindigkeit rotiert, während das Werkzeug auf einer Kreisbahn geführt wird, wobei die Drehgeschwindigkeit des Werkstücks und die Umlaufgeschwindigkeit (Bahngeschwindigkeit) des Werkzeuges auf seiner Kreisbahn voneinander abhängig sind und wobei ferner das Werkzeug während des gesamten Umlaufs am Werkstück angreift, wobei zur Erzeugung einer vorgegebenen Polygonkontur die ortsfeste Drehbewegung des Wekstücks und die Bewegung des Werkzeugs auf seiner exzentrisch zur Werkstückdrehachse verlaufenden Kreisbahn überlagert werden.

Aus der DE-A-2 355 036 ist ein Verfahren der eingangs bezeichneten Art bekannt, bei dem das Werkzeug in bezug auf das Werkstück auf einer Ellipsenbahn geführt ist. Durch die Überlagerung der Drehbewegung des Werkstücks und der Bewegung des eine Ellipsenbahn durchlaufenden Werkzeugs lassen sich entsprechende Polygonstrukturen, auch solche mit scharf ausgezogenen Ecken, erzeugen. Bei der Umsetzung in die Praxis ergeben sich für das vorbekannte Verfahren Nachteile, so beispielsweise eine erhebliche Reduzierung der Arbeitsgeschwindigkeiten, da die Getriebe zur Erzeugung der elliptischen Bewegung des Werkzeugs nur begrenzte Drehzahlen zulassen. Ein weiterer Nachteil der vorbekannten Verfahrensweise liegt darin, dass das zur Erzeugung des Bewegungsgesetzes erforderliche Getriebe verhältnismässig gross gebaut werden muss und dementsprechend zur Erzeugung von Polygonen mit unterschiedlichen Durchmessern eine Hebeluntersetzung vorgesehen werden muss, die nur schwierig mit der erforderlichen Steifigkeit ausgeführt werden kann.

Zur Herstellung von Werkstücken mit polygonaler Aussen- und/oder Innenkontur sind weiterhin in CH-A-330 925 sowie SU-A-738 771 Verfahren angegeben, die jedoch dadurch zu charakterisieren sind, dass das Werkzeug mit konstanter Bahngeschwindigkeit auf einer Kreisbahn geführt ist, wobei die Bahnkurve des Werkzeugs die Werkstückdrehachse nicht umschliesst. Hierdurch ergeben sich hinsichtlich der erzeugbaren Polygone erhebliche Beschränkungen, insbesondere ist es nicht möglich, bei dem Verfahren nach der erstgenannten Druckschrift Polygone mit scharf ausgezogenen Ecken und bei dem Verfahren gemäss der nächstgenannten Druckschrift Polygone mit abgerundeten Ecken zu erzeugen.

Bei dem Verfahren gemäss der CH-A-274 321 ist zwar eine von der Kreisbahn abweichende Bahnkurve für das Werkzeug bekannt. Dieses Verfahren erlaubt jedoch nur Bewegungen auf einer Ellipsenbahn, so dass von daher schon eine Beschränkung in der Zahl der möglichen Polygonkonturen gegeben ist. Hinsichtlich der Vorrichtung zur Durchführung des vorbekannten Verfahrens ist festzustellen, dass auch hier wiederum das Werkzeug auf einer Art Kreuzschlitten geführt ist, so dass sich die geschlossene Bahnkurve aus einer Überlagerung von zwei Translationsbewegungen ergibt, so dass hier aufgrund der ständigen Bewegungsumkehr alle Lagerspiele in vollem Umfang sich auf die Präzision der zu erzeugenden Polygonkontur nachteilig auswirken.

Aus der DE-C-513 327 ist ferner ein Verfahren bekannt, bei dem das drehende Werkstück gleichzeitig auf einer Kreisbahn bewegt wird, während das Werkzeug selbst stillsteht, allenfalls Schwenkbewegungen ausführt, um einen konstanten Eingriffswinkel zwischen Werkzeug und Werkstück zu erhalten. Mit diesem Verfahren lassen sich innerhalb gewisser Grenzen Werkstücke mit epi- oder hypozykloidischer Kontur herstellen. Ein wesentlicher Nachteil dieses Verfahrens besteht jedoch darin, dass das Werkstück selbst ausser der Drehbewegung um seine Körperachse auch noch auf einer exzentrisch hierzu liegenden Kreisbahn geführt wird, so dass hier erhebliche Beschränkungen in der Arbeitsgeschwindigkeit hingenommen werden müssen, da wegen der entsprechend dem Arbeitsfortschritt abnehmenden Masse des Werkstücks keine einwandfreie Auswuchtung des Systems möglich ist. Alle Unwuchten machen sich unverzüglich negativ sowohl bei der erzielbaren Oberflächengüte als auch bei der erzielbaren Massgenauigkeit bemerkbar.

Der Erfindung liegt nun die Aufgabe zugrunde, ein Verfahren anzugeben, das höhere Arbeitsgeschwindigkeiten und vielfältigere Variationsmöglichkeiten zulässt.

Diese Aufgabe wird bei einem gattungsgemässen Verfahren dadurch gelöst, dass die Bahngeschwindigkeit des Werkzeugs jeweils während eines Umlaufs nach einem periodischen Bewegungsgesetz geändert wird, das durch die vorgegebene Polygonkontur bestimmbar ist und dass zur Erzeugung der periodischen Änderung der Bahngeschwindigkeit des Werkzeugs jeweils während eines Umlaufs auf seiner Kreisbahn die Drehzahl des Antriebs für das Werkzeug über einen mit dem Bewegungsgesetz programmierten Funktionsgeber periodisch geändert wird.

Dieses Verfahren hat den Vorteil, dass die zur Erzeugung der Polygonkontur erforderlichen Überlagerungen durch eine Überlagerung einer Kreisbewegung des Werkstücks und einer Kreisbahn des Werkzeugs unmittelbar am Werkstück erfolgt und die zu erzeugende Polygonkontur durch Veränderungen der Bewegungsgeschwindigkeit des auf einer Kreisbahn geführten Werkzeugs jeweils während eines Umlaufs bewirkt wird. Dies bietet für die praktische Konstruktion erhebliche Vorteile und hat darüber hinaus den Vorteil, dass innerhalb des zulässigen Eingriffswinkels zwischen Werkzeug und Werkstück praktisch beliebige Polygonprofile herstellbar sind. Entscheidend ist hierbei, dass trotz der Kreisbahn des Werkzeugs durch das für das gewünschte Profil jeweils vorgebbare Bewegungsgesetz nicht nur die unterschiedlichsten Profilkonturen herstellbar sind, sondern dass durch entsprechende Korrekturen im zeitlichen Ablauf des Bewegungsgesetzes in einfacher Weise zonenweise Anpassungen der Polygonkontur an den vorgesehenen Verwendungszweck möglich sind. Dies gilt insbesondere dann, wenn ein elektronischer Funktionsgeber zur Ansteuerung des Antriebs des Werkzeugs verwendet wird. Dieses Verfahren hat vor allem den Vorteil, dass ohne Änderung der Bahnkurve des Werkzeugs – ausgenommen die Einstellung des Durchmessers der Kreisbahn – nur durch eine Variation der Bahngeschwindigkeit des Werkzeugs während eines Umlaufs die gewünschte Polygonstruktur festgelegt werden kann. Auf diese Weise ist es möglich, Vielecke mit scharf ausgezogenen Ecken zu erzeugen, wobei die Seitenflächen sowohl eben als auch gewölbt sein können, ebenso auch Vielecke mit abgerundeten Ecken oder mit unsymmetrisch konturierten Seitenflächen. Der Funktionsgeber kann hierbei elektronisch ausgebildet sein, beispielsweise in Form eines elektronischen Rechners oder auch als mechanisches Getriebe ausgebildet sein. Sowohl mit der elektronischen als auch mit der mechanischen Erzeugung des Bewegungsgesetzes lässt sich eine hohe Präzision erreichen, da auch bei den elektronischen Bauelementen praktisch kein Schlupf zwischen Werkstückbewegung und Werkzeugbewegung auftritt.

In einer bevorzugten Ausgestaltung des Verfahrens ist vorgesehen, dass bezogen auf die Ausrichtung des Eingriffspunktes am Werkstück das Werkzeug im wesentlichen translatorisch auf seiner exzentrisch zur Werkstückdrehachse verlaufenden Kreisbahn geführt wird, die durch den Umkreis und den Inkreis des zu erzeugenden Polygonprofils begrenzt ist. Diese Führung des Werkzeugs bietet nicht nur definierte Eingriffsverhältnisse zwischen Werkstück und Werkzeug, sondern gestattet es auch in einfacher Weise, die Massenkräfte zu kompensieren und zu einer sehr viel kompakteren und damit steiferen Konstruktion zu kommen, die eine höhere Präzision der erzeugten Werkstücke bietet. Die Kreisbahn verläuft hierbei tangierend zwischen dem Inkreis und dem Umkreis des zu erzeugenden Profils.

In einer anderen Ausgestaltung des Verfahrens ist vorgesehen, dass bezogen auf die Ausrichtung des Eingriffspunktes am Werkstück das Werkzeug auf seiner exzentrisch zur Werkstückdrehachse verlaufenden Kreisbahn umlaufend geführt wird, wobei die Kreisbahn des Werkzeugs das Werkstück umschliesst und den Umkreis und den Inkreis des zu erzeugenden Profils tangiert. Hierdurch ergeben sich geringere Werkzeuggeschwindigkeiten und günstigere Eingriffswinkel für das Werkzeug. Vorteilhaft ist es, wenn das Werkzeug auf einer Kreiszylinderbahn geführt wird, da dann auch Werkzeuge mit grosser Schnittbreite, beispielsweise Schleifscheiben, eingesetzt werden können. Nach diesem Verfahren lassen sich Querschnittskonturen mit etwa elliptischem Querschnitt oder einem «dreieckigen» Querschnitt nach Art eines sogenannten «Gleichdick» erzeugen. Im Hinblick auf die erzielbare hohe Massgenauigkeit lassen sich derartige Querschnittskonturen beispielsweise für Wellensteckverbindungen oder dgl. einsetzen. Die Konturenform wird hierbei durch das Verhältnis der Zahl der Umläufe des Werkzeugs zur Zahl der Umdrehungen des Werkstücks bestimmt, nachstehend als Drehzahlverhältnis bezeichnet.

Während bei dem vorstehend angegebenen Verfahren bei konstanter Bahngeschwindigkeit eine Beeinflussung der Polygonkontur im wesentlichen nur vom Drehzahlverhältnis zwischen Werkstück und Werkzeug und dem Durchmesser der Werkzeugbahn abhängig ist, wie auch beim Stand der Technik, und keine Polygonkonturen mit geraden Seitenflächen erzeugt werden können, ist dies mit dem erfindungsgemässen Verfahren möglich, wobei das Werkzeug auf einer Kreisbahn geführt wird, und die Bahngeschwindigkeit des Werkzeugs jeweils während eines Umlaufs periodisch geändert wird.

Die Massnahmen zur Erzeugung des Bewegungsgesetzes bestehen in einer Ausgestaltung der Erfindung darin, dass das Bewegungsgesetz für die Bahngeschwindigkeit des Werkzeugs jeweils während eines Umlaufs auf seiner Kreisbahn definiert ist durch die sich ändernde Winkelgeschwindigkeit des Mittelpunktes eines Kreises, der ohne zu gleiten auf der Aussenseite eines feststehenden Kreises mit gleichem Durchmesser abrollt, wobei die Winkelgeschwindigkeit auf den Mittelpunkt des feststehenden Kreises bezogen ist, wobei ferner ein dem umlaufenden Kreis fest zugeordneter zweiter Punkt, der bei dem Umlauf des abrollenden Kreises eine Pascalsche Kurve beschreibt, mit im wesentlichen konstanter Winkelgeschwindigkeit um einen innerhalb der Pascalschen Kurve liegenden Drehpunkt geführt wird.

In einer anderen Ausgestaltung der Erfindung bestehen die Massnahmen darin, dass das Bewegungsgesetz für die Bahngeschwindigkeit des Werkzeugs jeweils während eines Umlaufs definiert ist durch die sich ändernde Winkelgeschwindigkeit der Drehachse eines Kurbelarmes, die ihrerseits auf einer Kreisbahn mit höherer Winkelgeschwindigkeit aber gleicher Drehrichtung umläuft, wobei die Winkelgeschwindigkeit des Umlaufs der Drehachse auf der Kreisbahn von der Winkelgeschwindigkeit der Drehung der Drehachse selbst abhängig ist und dass der Kurbelzapfen von einer mit konstanter Winkelgeschwindigkeit umlaufenden Schleife angetrieben wird, deren Drehachse mit der Drehachse der Kreisbahn der Drehachse des Kurbelzapfens zusammenfällt oder radial dazu verschoben ist.

Beide Massnahmen haben den Vorteil, durch die Vorgabe jeweils einer entsprechenden Pascalschen Kurve einerseits und der Vorgabe des Drehzahlverhältnisses andererseits, beliebige Polygonkonturen zu erzeugen. Durch die Vorgabe des Drehzahlverhältnisses wird die «Eckenzahl» festgelegt, während die Vorgabe der Pascalschen Kurve den Konturenverlauf insgesamt festlegt, so beispielsweise scharf ausgezogene Ecken, ebene oder gekrümmte Seitenflächen etc. Die Drehachsen von Kurbelarm und Schleife können parallel mit Abstand zueinander angeordnet sein.

Bei einer mechanischen Erzeugung des Bewegungsgesetzes ist in einer bevorzugten Ausgestaltung der Erfindung vorgesehen, dass zur Veränderung der Bahngeschwindigkeit des Werkzeugs eine mit einem Umlaufrädertrieb gekoppelte, umlaufende Schleife verwendet wird, die mit konstanter, auf die Drehgeschwindigkeit des Werkstücks abgestimmte Drehgeschwindigkeit angetrieben wird und dass die Umlaufbewegung des Werkzeugs vom Umlaufrad abgenommen wird.

In einer weiteren Ausgestaltung des erfindungsgemässen Verfahrens ist vorgesehen, dass bei einer translatorischen Bewegung der Kreisbahn des Werkzeugs die Schubachse der Bewegung des Werkzeugs und die Überdeckungslage von Schleife und Umlaufradsteg in einer Ebene liegen und die Überdeckungslage der Schleife gegenüber der Schubachse unter einem Winkel hierzu einstellbar ist. Unter Schubachse ist die Verbindungslinie der Berührungspunkte des von der Werkzeugschneide beschriebenen Kreises mit dem Inkreis und dem Umkreis der herzustellenden Polygonkontur zu verstehen. Die «Überdeckungslage» ist durch die Polarachse der vorgegebenen Pascalschen Kurve definiert.

Solange die Schubachse und die durch die Überdeckungslage definierte Achse in einer Ebene liegen, ergeben sich symmetrische Polygonkonturen, während eine Winkelstellung zwischen Schubachse und Überdeckungslage Polygonkonturen mit unsymmetrischen Seitenflächen ergibt. Zur Definition dieser Ebene wird davon ausgegangen, dass die Schubachse und die Achse der Überdeckungslage parallel zueinander ausgerichtet sind.

In einer anderen Ausgestaltung ist vorgesehen, dass das Bewegungsgesetz aus der Bahngeschwindigkeit eines Punktes abgeleitet wird, der mit konstanter Winkelgeschwindigkeit eine Ellipsenbahn durchläuft. Hierbei ist besonders vorteilhaft, wenn das Bewegungsgesetz zur Änderung der Bahngeschwindigkeit des Werkzeugs während eines Umlaufs einem ganzzahligen Vielfachen der Winkelgeschwindigkeit der Drehachse eines Kurbelarmes entspricht, die ihrerseits auf einer Kreisbahn mit gleicher Winkelgeschwindigkeit, aber gegenläufiger Drehrichtung umläuft, wobei die Winkelgeschwindigkeit des Umlaufs der Drehachse auf der Kreisbahn von der Winkelgeschwindigkeit der Drehung der Drehachse selbst abhängig ist, und dass der Kurbelzapfen von einer mit konstanter Winkelgeschwindigkeit umlaufenden Schleife angetrieben wird, deren Drehachse die Drehachse der Kreisbahn der Drehachse des Kurbelarmes ist.

Die Erfindung bezieht sich ferner auf eine Vorrichtung zur Herstellung von Werkstücken mit polygonaler Aussen- und/oder Innenkontur, insbesondere durch spanabhebende Bearbeitung, mit einer drehbar gelagerten, angetriebenen Werkstückaufnahme und einem Werkzeug, das entlang einer geschlossenen Bahnkurve bewegbar geführt ist und mit dem Antrieb der Werkstückaufnahme in Verbindung steht.

Gemäss der Erfindung ist vorgesehen, dass der rotierende Träger für den Werkzeughalter mit einem über die für die zu erzeugende Polygonkontur vorgegebene, das Bewegungsgesetz bestimmende Steuerfunktion ansteuerbaren Antrieb verbunden ist. Dies hat den Vorteil einer Reduzierung des mechanischen Bauaufwandes einerseits und einer Erhöhung der Variationsmöglichkeiten hinsichtlich der zu erzeugenden Polygonkonturen. Durch einen zwischengeschalteten Funktionsgeber, der zweckmässigerweise frei programmierbar sein sollte, lassen sich innerhalb der durch die Eingriffsbedingungen zwischen Werkzeug und Werkstück gesetzten Grenzen die Konturen praktisch beliebig variieren.

In einer mechanischen Ausgestaltung der vorstehend beschriebenen Vorrichtung mit Führung des Werkzeugs auf einer Kreisbahn ist gemäss der Erfindung vorgesehen, dass als steuerbarer Antrieb für den Träger des Werkzeughalters zwischen Antriebsmotor und Träger ein nach Pascalschen Kurven steuerbares Getriebe zwischengeschaltet ist. In einer besonders zweckmässigen Ausgestaltung ist hierbei vorgesehen, dass das nach Pascalschen Kurven steuerbare Getriebe durch einen Umlaufrädertrieb mit einer Schleife gebildet wird, die über einen Kurbelzapfen mit dem Umlaufrad verbunden ist, wobei die Schleife den antreibenden Getriebeteil und der Steg des Umlaufrades den Abtrieb bildet, der mit der Welle des Trägers für den Werkzeughalter verbunden ist, wobei die Drehachse des Trägers mit der Drehachse des Steges identisch ist. Mit Hilfe eines derartigen Getriebes lässt sich einfach das jeweilige, durch Pascalsche Kurfen definierte Bewegungsgesetz des Werkzeugs erzeugen. Ein weiterer Vorteil dieser Getriebebauform liegt darin, dass es praktisch spielfrei arbeitet, so dass hier eine Grundlage für die hohe Präzision gegeben ist. Dies gilt auch für die Verbindung zwischen Schleife und Kurbelzapfen, da hier aufgrund der umlaufenden Bewegung der Schleife der Kurbelzapfen während des gesamten Umlaufs nur an einer Seite der Schleife anliegt.

In einer bevorzugten Ausgestaltung der Erfindung ist vorgesehen, dass bei einer translatorischen Bewegung der Kreisbahn des Werkzeugs die Schubachse der Bewegung des Werkzeugs und die Überdeckungslage von Schleife und Umlaufradsteg in einer Ebene liegen und dass die Überdeckungslage der Schleife gegenüber der Schubachse unter einem Winkel hierzu einstellbar ist. Sind Schubachse und Überdeckungslage in einer Ebene, so ergeben sich symmetrische Polygonkonturen, während bei Einstellung einer Winkellage zwischen Überdeckungslage und Schubachse sich Polygonkonturen mit unsymmetrischen Seiten ergeben.

Gemäss einer weiteren Ausgestaltung der Erfindung ist vorgesehen, dass die Drehachse der Schleife exzentrisch zur Drehachse des Steges einstellbar ist. Hierdurch ergibt sich eine weitere, konstruktiv einfach zu verwirklichende Variationsmöglichkeit für das gewünschte Bewegungsgesetz.

In Ausgestaltung der Erfindung ist ferner vorgesehen, dass der dem Umlaufrad zugeordnete Kurbelzapfen in bezug auf das Umlaufrad verschieb- und feststellbar ausgebildet ist. Auch durch diese Massnahme ergeben sich konstruktiv einfach zu verwirklichende Variationsmöglichkeiten für das Bewegungsgesetz des Werkzeugs. Wird beispielsweise die Drehachse der Schleife exzentrisch zur Drehachse des Steges eingestellt, wobei Schubachse und Überdeckungslage in einer Ebene liegen, und wird ferner der Kurbelzapfen auf dem Umlaufrad radial so verschoben und festgelegt, dass er mit dem Mittelpunkt des Umlaufrades zusammenfällt, so ergibt sich ein Polygon mit abgerundeten Ecken und je nach der eingestellten Exzentrizität des Werkzeugs auf dem Träger mit nach aussengewölbten Seitenflächen, eine Kontur also, die annähernd der Kontur eines Gleichdicks entspricht, wenn ein Drehzahlverhältnis von 3:1 eingestellt wird.

In einer bevorzugten Ausgestaltung der Erfindung ist eine Kupplung vorgesehen, durch die der Träger für den Werkzeughalter vom Steg des Umlaufrades getrennt und mit der Antriebswelle der Schleife verbunden werden kann. Hierdurch ist es möglich, die Vorrichtung von einem durch Pascalsche Kurven vorgebbaren Bewegungsgesetz auf ein allein durch die Exzentrizität der Kreisbahn des Werkzeuges in bezug auf die Drehbewegung des Werkstücks und das Drehzahlverhältnis zwischen Werkzeug und Werkstück festgelegtes Bewegungsgesetz umzuschalten.

In einer weiteren Ausgestaltung der Erfindung ist ferner vorgesehen, das Polrad des Umlaufrädergetriebes zusätzlich in Abhängigkeit vom Werkzeugvorschub anzutreiben. Überlagert man hierzu die ohnehin vorhandene Vorschubbewegung des Werkzeugs, so ist es möglich, ein Werkstück mit einem Wendel zu versehen, wobei der Wendel eine entsprechende Polygonkontur aufweist.

In weiterer Ausgestaltung ist erfindungsgemäss vorgesehen, dass zum Ausgleich der Massenträgheitsmomente, die durch die sich jeweils während eines Umlaufs ändernde Bahngeschwindigkeit des Werkzeugs auftreten, das Steuergetriebe mit einem Differentialgetriebe verbunden ist, das eine Schwungmasse antreibt. Bevorzugt ist hierbei vorgesehen, dass das Differentialgetriebe zum Antrieb einer Schwungmasse zum Ausgleich der Massenträgheitsmomente ein Planetengetriebe ist, wobei die Schleife den Planetenradträger antreibt, das Sonnenrad mit der Welle des Trägers für den Werkzeughalter verbunden ist, und das mit dem Planetenrad im Eingriff stehende Gegenrad koaxial zum Sonnenrad gelagert ist und die Schwungmasse trägt.

In weiterer vorteilhafter Ausgestaltung der Erfindung ist vorgesehen, dass die Drehachse des Trägers für den Werkzeughalter unter einem Winkel zur Drehachse des Werkstücks einstellbar ist. Diese Ausgestaltung erlaubt es nicht nur, konische Werkstücke mit polygonaler Aussenkontur herzustellen, sondern darüber hinaus auch bei einer Einstellung der beiden Achsen zueinander unter 90° in eine Stirnfläche eines rotierenden Werkstückes entsprechende Polygonkonturen einzuarbeiten.

Eine weitere vorteilhafte Vorrichtung zur Erzeugung des jeweiligen Bewegungsgesetzes ist in Ausgestaltung der Erfindung dadurch gekennzeichnet, dass das nach Pascalschen Kurven steuerbare Getriebe durch eine umlaufende Kurbelschleife gebildet wird, wobei die Kurbelschleife den antreibenden Getriebeteil und die Kurbel den Abtrieb bildet, dass die Antriebswelle der Kurbel in einer exzentrisch zur Drehachse der Kurbelschleife angeordneten und gleichsinnig umlaufenden Lagerbüchse gelagert ist, dass die Lagerbüchse über ein Übersetzungsgetriebe mit der Abtriebswelle der Kurbel verbunden ist und dass die Abtriebswelle mit dem drehbar gelagerten Werkzeugträger in Verbindung steht.

Eine weitere vorteilhafte Vorrichtung zur Erzeugung des jeweiligen Bewegungsgesetzes ist in Ausgestaltung der Erfindung dadurch gekennzeichnet, dass das nach Ellipsen steuerbare Getriebe durch eine umlaufende Kurbelschleife gebildet wird, wobei die Kurbelschleife den antreibenden Getriebeteil und die Kurbel den Abtrieb bildet, dass die Abtriebswelle der Kurbel in einer exzentrisch zur Drehachse der Schleife angeordneten und gegenläufig umlaufenden Lagerbüchse gelagert ist, dass die Lagerbüchse über ein Getriebe zur Drehrichtungsumkehr mit der Abtriebswelle der Kurbel verbunden ist und dass die Abtriebswelle gleichzeitig über ein Übersetzungsgetriebe mit dem drehbar gelagerten Werkzeugträger in Verbindung steht.

Für die Führung des Werkzeugs auf einer translatorischen Kreisbahn ist erfindungsgemäss vorgesehen, dass das Werkzeug in einem Werkzeughalter gehalten ist, der über einen Lagerblock an einem rotierenden Träger exzentrisch zu dessen Drehachse und relativ zu diesem drehbar gehalten ist und mit einer Momentenstütze am Gestell abgestützt ist. Diese Anordnung erlaubt eine sehr kompakte und damit steife Bauweise, die eine hohe Masshaltigkeit und Präzision der erzeugten Werkstücke gewährleistet. Ein weiterer Vorteil dieser erfindungsgemässen Bauform liegt darin, dass die Einstellung der gewünschten Werkstückdurchmesser konstruktiv sehr vereinfacht werden kann, ohne dass die durch die Konstruktion vorgegebene Steifigkeit sich ändert, da das Werkzeug durch radiale Zustellung in bezug auf das Werkstück eingestellt werden kann. In einer bevorzugten Ausgestaltung der Erfindung ist hierzu vorgesehen, dass der Lagerblock zur Einstellung der Exzentrizität auf dem Träger radial verschieb- und feststellbar gehalten ist. Hierdurch bleibt der Längsabstand zwischen der Werkzeugspitze einerseits und dem Lager für den gesamten vorgegebenen Durchmesserbereich konstant.

In einer bevorzugten, vorteilhaften Ausgestaltung ist vorgesehen, dass der Werkzeughalter und die Momentenstütze ein Kurbelgetriebe, insbesondere ein Parallelkurbelgetriebe bilden. Die Ausbildung als Parallelkurbeltrieb hat den Vorteil, dass alle Punkte des Werkzeughalters die gleiche

Kreisbahn beschreiben, so dass in bezug auf den Werkzeughalter der Eingriffspunkt des Werkzeugs beliebig angeordnet werden kann. Dies ist beispielsweise für eine Bearbeitung durch einen Schleifvorgang von Bedeutung wegen der relativ grossen Abmessungen des Schleifsteins. Da ausserdem hierbei die Kreisbahn Teil einer Kreiszylinderfläche ist, kann jede gewünschte Schleifsteinbreite eingesetzt werden. Dies gilt auch bei der Verwendung von Fräsern oder Messerköpfen oder geometrisch ähnlich gestalteten Werkzeugen, wie Rollen oder dgl. Das Parallelkurbelgetriebe kann entweder als Doppelkurbelgetriebe oder aber vorteilhaft als Einfachkurbel mit Parallellenker als Momentenstütze ausgebildet sein.

Die Erfindung wird anhand schematischer Zeichnungen von Ausführungsbeispielen näher erläutert. Es zeigen:

Fig. 1 eine Aufsicht auf eine Vorrichtung mit einem translatorisch auf einer Kreisbahn geführten Werkzeughalter

Fig. 2 eine Stirnansicht des Werkzeughalters gemäss Fig. 1

Fig. 3 eine Stirnansicht für einen Werkzeughalter mit einer anderen Führung,

Fig. 4 eine Aufsicht auf eine Vorrichtung mit einem nach Pascalsche Kurven steuerbaren Getriebe zur Erzeugung des Bewegungsgesetzes für den Werkzeughalter,

Fig. 5, 6 und 7 verschiedene Einstellmöglichkeiten des Getriebes zur Erzeugung des Bewegungsgesetzes in einer Stirnansicht,

Fig. 8 in einer Aufsicht eine Vorrichtung mit der Einstellung des Getriebes zur Erzeugung des Bewegungsgesetzes entsprechend Fig. 5,

Fig. 9a–h mit den Vorrichtungen gemäss Fig. 1 bzw. Fig. 4 erzeugbare Polygonkonturen,

Fig. 10 ein Blockschaltbild für eine elektronisch gesteuerte Vorrichtung,

Fig. 11 eine andere Ausführungsform für ein nach Pascalschen Kurven steuerbares Getriebe,

Fig. 12 eine Ausführungsform für ein nach einer Ellipse steuerbares Getriebe,

Fig. 13, 14 die Bahn der Werkzeugspitze in bezug auf das Werkstück.

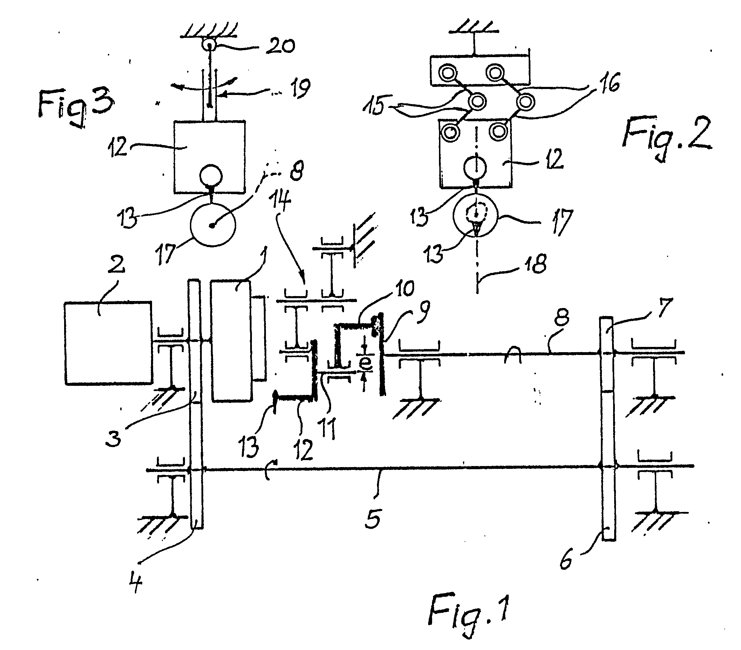

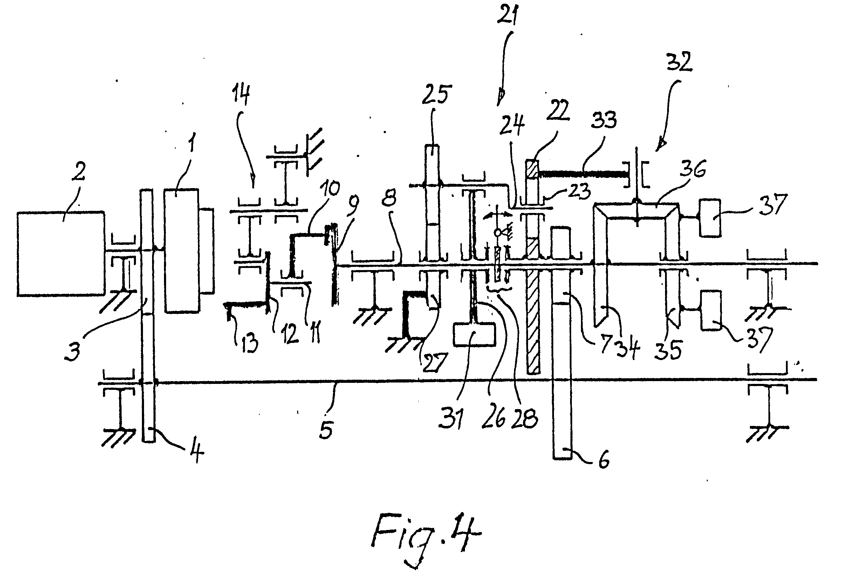

Die in Fig. 1 schematisch dargestellte Vorrichtung weist eine drehbar gelagerte Werkstückaufnahme 1 auf, die über einen Antriebsmotor 2 mit konstanter Drehgeschwindigkeit angetrieben wird. Über ein Zahnradpaar 3, 4 und eine Vorgelegewelle 5 wird über ein Zahnradpaar 6, 7 eine Welle 8 angetrieben. Das Zahnradpaar 3, 4 bzw. 6, 7 kann als Wechselrädergetriebe oder auch als Schaltgetriebe ausgebildet sein, mit dessen Hilfe das Drehzahlverhältnis zwischen der Drehzahl der Werkstückaufnahme 1 einerseits und der Umlaufzahl des Werkzeugs andererseits vorgegeben wird.

Mit der Welle 8 ist ein Träger 9 verbunden, an dem ein Lagerblock 10 radial verschieb- und einstellbar angeordnet ist. Im Lagerblock 10 ist über eine Achse 11 ein Werkzeughalter 12 gelagert, mit dem ein Werkzeug 13, beispielsweise ein Drehmeissel in üblicher Weise fest verbunden ist. Je nach dem, ob eine Innenkontur oder eine Aussenkontur zu drehen ist, weist die Werkzeugspitze radial nach aussen bzw. nach innen auf das in der Werkstückaufnahme 1 eingespannte Werkstück.

Durch entsprechende Einstellung des Lagerblocks 10 auf dem Träger 9 kann die Achse 11 des Werkzeughalters 12 exzentrisch zur Drehachse des Trägers 9 und damit zur Welle 8 eingestellt werden, so dass bei einer Drehung des Trägers 9 die Achse 11 und damit auch die Spitze des Werkzeugs eine Kreisbahn mit dem Radius der Exzentrizität e beschreibt.

Der Werkzeughalter 12 ist nun über eine Momentenstütze 14 am Maschinenteil festgelegt, so dass das Werkzeug 13 in bezug auf die Werkzeugspitze eine translatorische Kreisbewegung beschreibt, wobei Werkzeughalter 12 und Momentenstütze 14 einen Kurbeltrieb bilden.

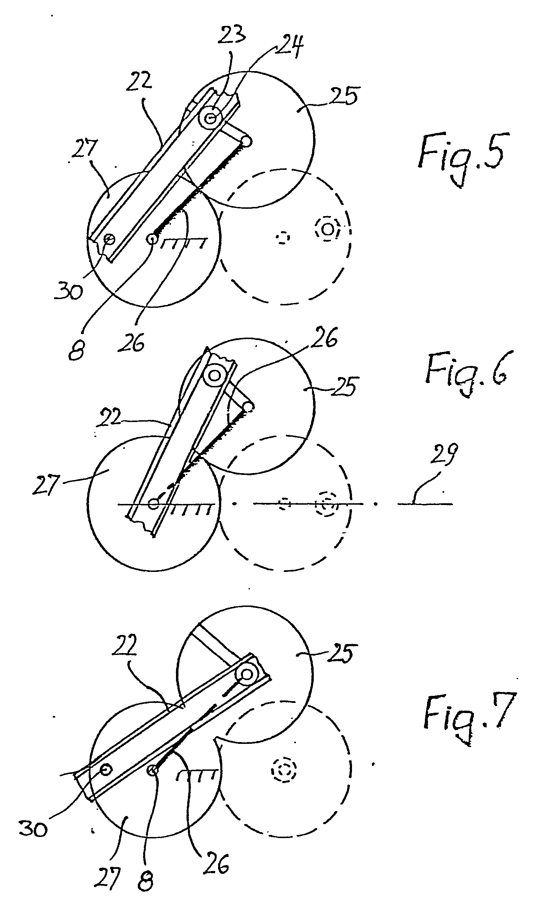

In Fig. 2 und 3 sind zwei unterschiedliche Ausführungsformen für die Momentenstütze 14 in einer Stirnansicht dargestellt. Bei der Ausführungsform gemäss Fig. 2 ist der Werkzeughalter 12 über Parallellenker 15, 16 geführt, so dass die Spitze des Werkzeugs 13 die eingezeichnete Kreisbahn 17 beschreibt. Hierbei ist die Spitze des Werkzeugs 13 immer parallel zur Schubachse 18 ausgerichtet. Alle Punkte beschreiben hierbei die gleiche Kreisbahn.

Bei der Ausführungsform gemäss Fig. 3 wird die Momentenstütze 14 durch einen Schwenkarm 19 mit Linearführung gebildet. Auch bei dieser Ausgestaltung unterliegt das Werkzeug 13 einer im wesentlichen translatorischen Kreisbewegung, da in den hier in Betracht kommenden Grössenordnungen für den Schwenkwinkel die durch die Schwenkbewegung bewirkte Drehung um den Anlenkungspunkt 20 des Schwenkarmes 19 vernachlässigbar ist. Die Werkzeugspitze soll hierbei aber so eingestellt sein, dass sie auf der Verlängerung der Achse 11 liegt, da sie sonst keine exakte Kreisbahn beschreibt.

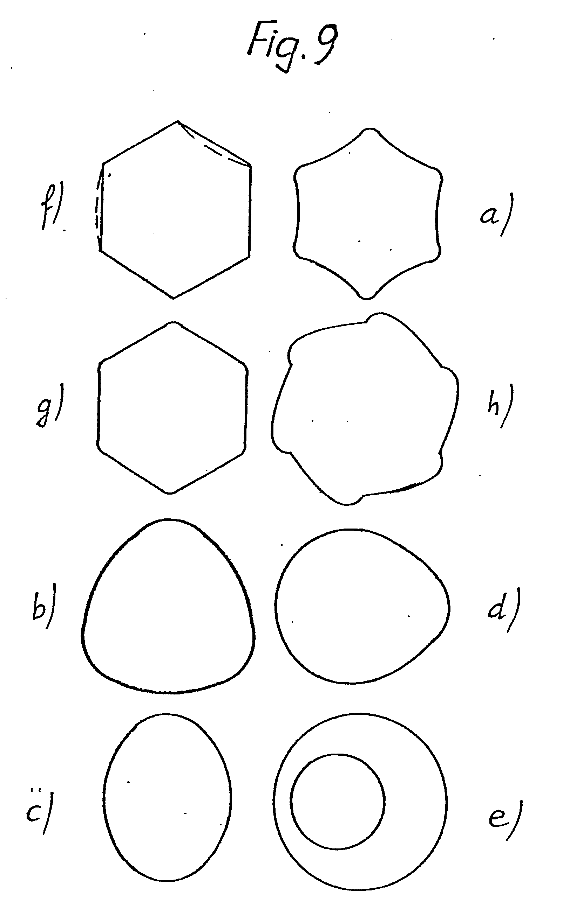

Mit einer Vorrichtung gemäss Fig. 1 lassen sich bei entsprechender Einstellung des Übersetzungsverhältnisses zwischen Drehzahl der Werkstückaufnahme 1 und Drehzahl des Trägers 9 sowie entsprechender Einstellung der Exzentrizität des Werkzeughalters 12 auf dem Träger 9 Polygonkonturen entsprechend Fig. 9a, b, c, d, e erzeugen. Für die Polygonkontur gemäss Fig. 9c ist beispielsweise ein Übersetzungsverhältnis zwischen Werkstück und Werkzeug von 1:2 einzusetzen, d.h. der Werkzeugumlauf ist doppelt so schnell wie der Umlauf des Werkstücks.

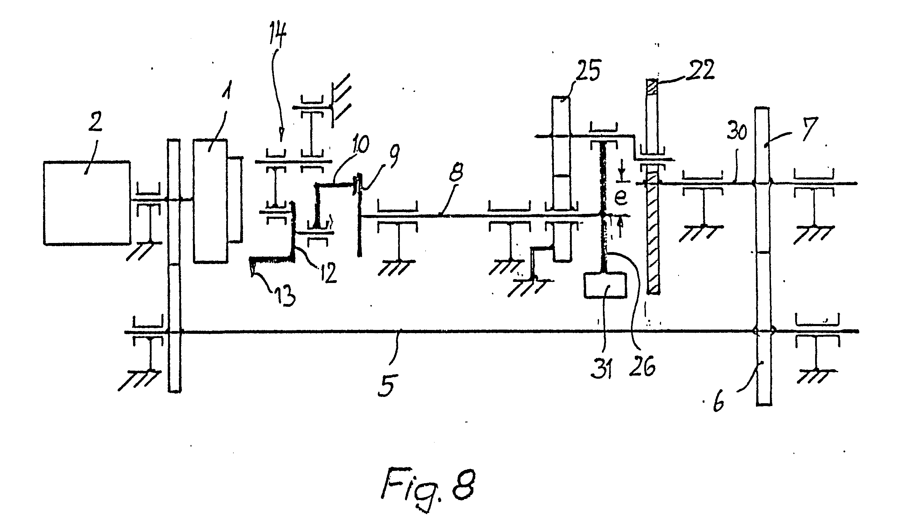

Die Vorrichtung gemäss Fig. 1 sowie die noch zu beschreibenden Vorrichtungen gemäss Fig. 4 und Fig. 8 sind zusätzlich mit einer hier nicht näher dargestellten Vorschubeinrichtung für das Werkzeug 13 vorgesehen, durch das dieses in Längsrichtung, d.h. in Richtung der Drehachse der Werkstückaufnahme 1 verschoben werden kann, wie dies beispielsweise von Drehbänken her bekannt ist. Aufgrund des konstruktiv einfachen Aufbaues des Antriebs- und Bewegungsmechanismusses des Werkzeughalters kann dieser als kompakte Baueinheit auf den Support einer Drehbank aufgebaut werden, so dass lediglich für eine entsprechende Koppelung der Welle 8 des Werkzeugantriebes mit dem Antrieb der Werkzeugaufnahme zu sorgen ist. Drehrichtung der Werkstückaufnahme 1 und der Welle 8 und damit die Bahnbewegung des Werkzeugs werden vorzugsweise gleichsinnig eingestellt.

Die Ausführungsform gemäss Fig. 4 weicht von der Ausführungsform gemäss Fig. 1 dadurch ab, dass die Welle 8 zusätzlich mit einem Getriebe 21 verbunden ist, das nach Pascalsche Kurven steuerbar ist. Bei dem Ausführungsbeispiel wird dieses Getriebe durch ein Umlaufrad-Schleifen-Getriebe gebildet.

Bei dieser Ausführungsform ist das Zahnrad 7 des Vorgelegegetriebes frei drehbar auf der Welle 8 gelagert und fest mit einer Getriebeschleife 22 verbunden. Mit dieser Getriebeschleife steht über eine Rolle 23 ein Kurbelzapfen 24 im Eingriff, der mit einem Umlaufrad 25 zur Variation des Kurbelarms radial verstell- und festlegbar verbunden ist. Die radiale Verstellbarkeit des Kurbelarms ist in dieser schematischen Darstellung nicht näher angegeben. Das Umlaufrad 25 ist in einem Steg 26 gelagert, der seinerseits auf der Welle 8 frei drehbar gelagert ist, so dass das Umlaufrad 25 auf einem feststehenden Polrad 27 abrollen kann. Durch eine Schaltkupplung 28 kann nun der auf der Welle 8 frei umlaufende Steg 26 mit dieser fest verbunden werden, so dass die Drehbewegung des Steges 26 unmittelbar auf die Welle 8 übertragen wird. Zum Vordrehen kann die Welle 8 mit der Schleife 22 gekoppelt werden. Hierbei wird der Kurbelzapfen 24 gelöst. Wird nun die konstante Drehbewegung der Werkstückaufnahme 1 über das Vorgelegegetriebe 6, 7 auf die Schleife 22 übertragen, so läuft diese ebenfalls mit konstanter Geschwindigkeit um. Das durch die Kurbel 24 des Umlaufrädergetriebes 25, 26, 27 vorgegebene Bewegungsgesetz bewirkt nun, dass die Welle 8 nicht mehr mit gleichbleibender Geschwindigkeit umläuft, sondern während einer Umdrehung entsprechend dem vom Umlaufrädergetriebe vorgegebenen Bewegungsgesetz eine Änderung der Geschwindigkeiten erfährt, so dass das Werkzeug 13 zwar eine Kreisbewegung ausführt, den Bewegungskreis während eines Umlaufs jedoch mit entsprechend wechselnden Geschwindigkeiten durchläuft.

In den Fig. 5, 6 und 7 ist das Umlaufrad-Schleifen-Getriebe in seinen wesentlichen Teilen in einer Stirnansicht dargestellt. Die einzelnen Elemente des Getriebes sind anhand der in Fig. 4 verwendeten Bezugszeichen ohne weiteres zu identifizieren. Die in Fig. 4 wiedergegebene Getriebeeinstellung entspricht der Stirnansicht gemäss Fig. 6. Wie in den Figuren angedeutet, ist der Kurbelzapfen 24 mit seiner Rolle 23 auf dem Umlaufrad 25 radial verschieb- und feststellbar gehalten, so dass über den Abstand des Kurbelzapfens 24 zur Mitte des Umlaufrades 25 das jeweils gewünschte Bewegungsgesetz eingestellt werden kann. Aus Fig. 6 ist auch der verwendete Begriff «Überdeckungslage» ersichtlich. Unter Überdeckungslage im Sinne der vorliegenden Erfindung wird die Stellung verstanden, bei der die Schleife 22 und der Steg 26 miteinander fluchten, d.h. also, wenn das Umlaufrad 25, die in Fig. 6 gestrichelt eingezeichnete Position einnimmt. Liegen die Schubachse des Werkzeugs und die Achse 29 der Überdeckungslage in einer Ebene, wobei davon ausgegangen wird, dass beide Achsen parallel verlaufen, dann ergeben sich bei entsprechender Abstimmung von Übersetzungsverhältnis zwischen Drehzahl des Werkstücks und Drehzahl des Werkzeugs, Exzentrizität des Werkzeugs und Länge des Kurbelarmes, beispielsweise die Polygonkontur gemäss Fig. 9f. Durch Veränderung der Exzentrizität ergibt sich dann bei sonst unveränderter Einstellung der Vorrichtung eine Polygonkontur gemäss Fig. 9f mit scharfen Kanten, jedoch mit nach innen eingewölbten bzw. nach aussen vorgewölbten Seitenflächen, wie dies jeweils für eine Seitenfläche in Fig. 9f dargestellt ist.

Werden die Schubachse und die Achse 29 der Überdeckungslage mit Bezug zueinander unter einem Winkel zueinander eingestellt, so ergibt sich bei der ansonsten für eine Sechseckkontur vorgegebenen Grundeinstellung die in Fig. 9h wiedergegebene Polygonkontur mit unsymmetrischen Seitenflächen.

Anstelle der in Fig. 5, 6 und 7 wiedergegebenen geradlinigen Kontur für die Schleife 22 kann hier auch eine Schleifenkontur mit wenigstens zonenweise gekrümmter Führungsbahn für die Kurbel 24 bzw. die Laufrolle 23 vorgesehen werden. Durch eine entsprechende Konturierung der Schleife 22 lassen sich sowohl der Verlauf der Polygonkontur im Eckenbereich als auch im Bereich der Seitenflächen beeinflussen. Dementsprechend werden auch die bei einer derartigen Schleifengestaltung entstehende Bahnkurven des Mittelpunktes der Rolle 23 auch als Pascalsche Kurven im Sinne der Erfindung angesehen; dies gilt auch, wenn derartige Kurven die Basis für eine elektronische Steuerung bilden. Weitere Möglichkeiten der Variation ergeben sich aus Fig. 7 und auch aus Fig. 5. Die Variation gemäss Fig. 5 ist in einer entsprechenden Aufsicht in Fig. 8 dargestellt. Wie aus der Aufsicht ersichtlich, sind hierbei die Welle 8 des Trägers 9 für den Werkzeughalter einerseits und die Antriebswelle 30 für die Schleife 22 andererseits exzentrisch zueinander angeordnet.

Aus der Aufsicht gemäss Fig. 4 ist eine weitere Ausgestaltungsmöglichkeit für die Vorrichtung ersichtlich, mit deren Hilfe die sich aus der Gesamtanordnung ergebenden Massenträgheitsmomente weitgehend ausgeglichen werden können. Zum einen wird hierzu der Steg 26 mit einer Ausgleichsmasse 31 versehen, so dass hier dieser Teil des Getriebes ohne Unwucht umlaufen kann.

Darüber hinaus ist mit der Schleife 22 ein Differentialgetriebe 32, hier ein Planetengetriebe, verbunden. Hierbei treibt die Schleife 22 den Planetenradträger 33 an. Das Sonnenrad 34 des Planetengetriebes ist mit der Welle 8 verbunden, während das Gegenrad 35, mit dem das Planetenrad 36 im Eingriff steht, die Schwungmasse 37 trägt und auf der Welle 8 oder einer gesonderten, nicht näher dargestellten Welle frei drehbar gelagert ist.

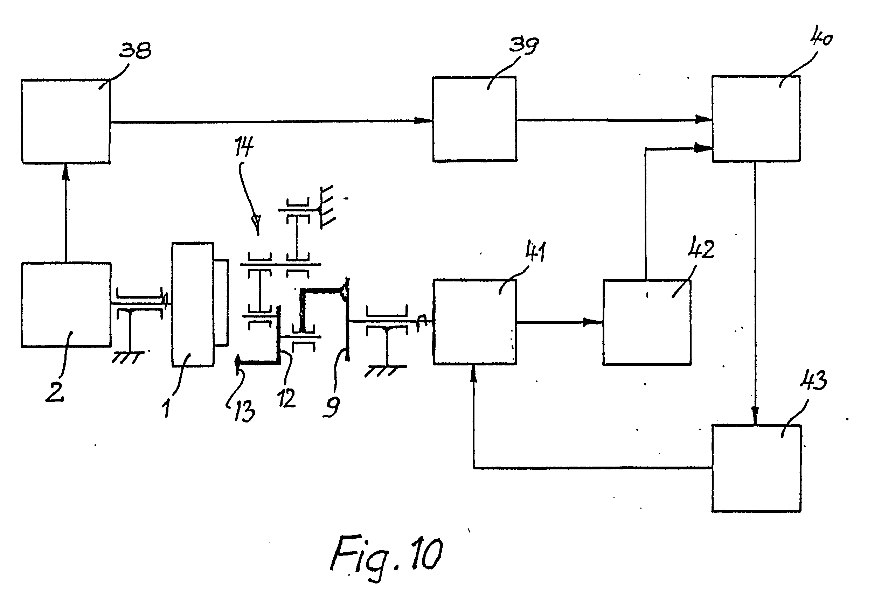

In Fig. 10 ist in Form eines Blockschaltbildes eine Vorrichtung dargestellt, bei der die Steuerung zur periodischen Änderung der Bahngeschwindigkeit des Werkzeugs mit elektronischen Mitteln durchgeführt wird. Hierbei steht der Antrieb 2 der Werkstückaufnahme 1 mit einem Drehwinkelgeber 38 in Verbindung. Das Ausgangssignal des Drehwinkelgebers 38, das die jeweilige Winkelstellung der Werkstückaufnahme 1 und damit des Werkstücks vorgibt, ist auf einen Funktionsgenerator 39 aufgeschaltet.

Im Funktionsgeber 39 wird diesem Signal durch entsprechende, an sich bekannte elektronische Mittel die für die jeweils gewünschte Polygonkontur erforderliche Pascalsche Kurve überlagert, sowie das gewünschte Drehzahlverhältnis zwischen Werkstück und Werkzeug vorgegeben. Das Ausgangssignal des Funktionsgenerators 39 wird als Sollwert einem Regler 40 aufgeschaltet. Der Träger 9 für das Werkzeug 13 ist seinerseits mit einem Antriebsmotor 41 verbunden, der diesen in der Regel gleichsinnig zum Werkstück dreht. Auch dieser Antriebsmotor 41 steht mit einem Drehwinkelgeber 42 in Verbindung, dessen Ausgangssignal die jeweilige Winkelstellung des Trägers 9 und damit die Lage des Werkzeugs 13 angibt. Dieses Ausgangssignal ist als Ist-Wert auf den Regler 40 aufgeschaltet.

Durch den Regler 40 wird aus dem Vergleich von Soll-Wert und Ist-Wert ein Regelsignal gewonnen, das auf eine sogenannte Leistungselektronik 43 üblicher Bauart aufgeschaltet ist. Entsprechend diesem Regelsignal wird nun die Drehzahl des Antriebsmotors 41 so gesteuert, dass das Werkzeug 13 die aufgrund des vorgegebenen Drehzahlverhältnisses und der vorgegebenen Pascalschen Kurve gewünschte, sich periodisch ändernde Bahngeschwindigkeit erhält, die zur Erzeugung des vorgegebenen Polygons erforderlich ist. Besonders zweckmässig ist es, wenn als Antriebsmotore Schrittmotore verwendet werden.

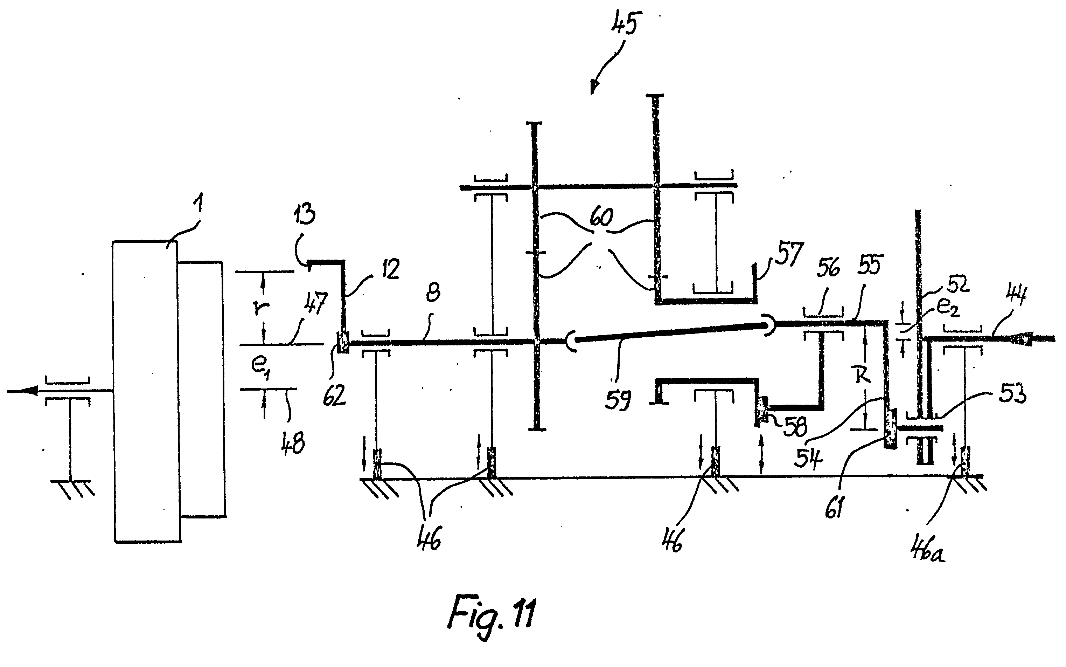

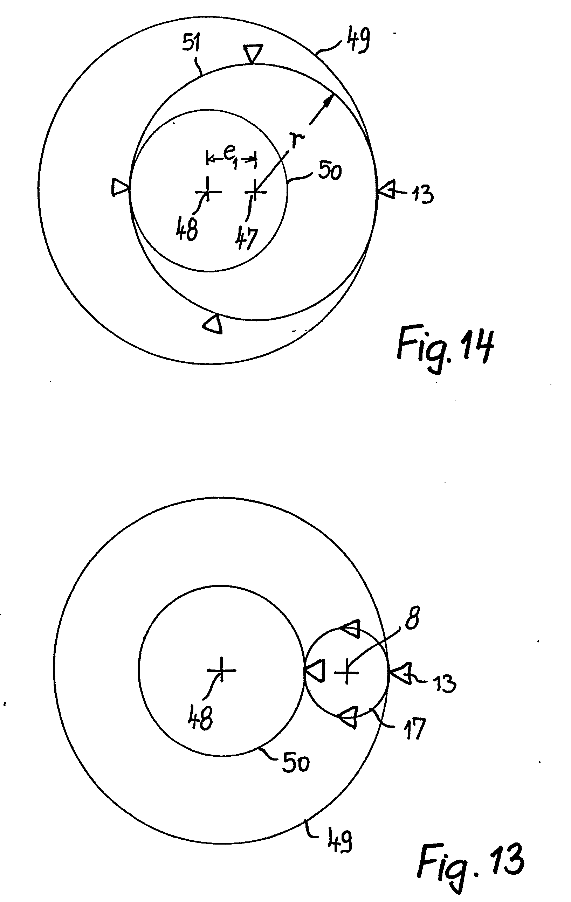

In Fig. 11 ist eine weitere Ausführungsform für ein nach Pascalschen Kurven steuerbares Getriebe dargestellt. Dieses Getriebe weist jedoch gegenüber dem in Fig. 4 dargestellten und beschriebenen Getriebe einige konstruktive Vereinfachungen sowohl hinsichtlich der Führung des Werkzeuges als auch hinsichtlich der Erzeugung der Pascalschen Kurven auf. Soweit Bauteile mit der in Fig. 4 dargestellten Ausführungsform übereinstimmen, sind gleiche Bezugszeichen verwendet. Auch hier weist die Vorrichtung eine drehbar gelagerte Werkstückaufnahme 1 auf, die über einen hier nicht näher dargestellten Antriebsmotor mit konstanter Drehgeschwindigkeit angetrieben wird. Über ein hier nicht näher dargestelltes Vorgelegegetriebe steht eine Welle 44 mit der Werkstückaufnahme 1 in Verbindung, über die sowohl ein Werkzeughalter 12 als auch das Getriebe 45 angetrieben wird, durch das das Bewegungsgesetz für das Werkzeug 13 erzeugt wird. Die gesamte Anordnung ist hierbei auf einem gemeinsamen Träger 46 gelagert und zwar so, dass die Drehachse 47 des Werkzeughalters 12 exzentrisch zur Drehachse 48 des Werkstücks ist, wie in Fig. 14 in bezug auf die Werkstückaufnahme 1 dargestellt. In Fig. 14 ist das zu erzeugende Polygonprofil durch seinen aussen begrenzenden Umkreis 49 und innen begrenzenden Inkreis 50 dargestellt. Der Umkreis 49 und der Inkreis 50 werden von dem auf der Kreisbahn 51 mit dem Radius r geführten Werkzeug tangiert, wobei, wie aus Fig. 14 ersichtlich, die Werkzeugbahn 51 die Drehachse 48 der Werkstückaufnahme bzw. des Werkstücks umschliesst.

Im Vergleich dazu ist in Fig. 13 die Werkzeugbahn 17 in bezug auf Umkreis 49 und Inkreis 50 des zu erzeugenden Profils dargestellt. Auch hier berührt das auf einer Kreisbahn 17 geführte Werkzeug Um- und Inkreis des zu erzeugenden Profils, liegt jedoch zwischen Um- und Inkreis, ohne die Werkstückachse 48 zu umgreifen. Aufgrund der translatorischen Führung ist bei der Führung entsprechend Fig. 13 das durch eine Spitze symbolisch dargestellte Werkzeug 13 gleichgerichtet, während bei der Ausführungsform gemäss Fig. 11, wie in Fig. 14 dargestellt, die Werkzeugspitze immer auf den Mittelpunkt ihrer Drehachse 47 gerichtet ist. Dies ist durch entsprechende Spitzen in Fig. 14 angedeutet.

Die Polygonkontur wird, wie vorstehend bereits ausführlich für andere Vorrichtungen dargelegt, dadurch erzeugt, dass das Werkzeug 13, obwohl auf einer Kreisbahn geführt, während eines Umlaufs nach einem bestimmten Bewegungsgesetz seine Geschwindigkeit verändert. Zur Erzeugung von Polygonprofilen mit praktisch beliebiger Kontur und beliebiger Eckenzahl ist hierzu ein nach Pascalschen Kurven gesteuertes Getriebe besonders zweckmässig. In Fig. 11 ist eine besonders kompakte Ausführungsform dargestellt. Das Getriebe 45 besteht im wesentlichen aus einer Kurbelschleife 52, die über einen Gleitstein 53 einen Kurbelarm 54 antreibt. Die Antriebswelle 55 des Kurbelarmes 54 ist in einer Lagerbüchse 56 gelagert, die ihrerseits auf einem als Hohlwelle ausgebildeten, drehbar gelagerten Halter 57 befestigt ist. Die Befestigung der Lagerbüchse 56 erfolgt über ein entsprechendes Stellelement 58, das es ermöglicht, die Abtriebswelle 55 des Kurbelarmes 54 exzentrisch gegenüber der Drehachse 44 der Kurbelschleife 52 einzustellen. Dementsprechend ist die Abtriebswelle 55 über eine Gelenkwelle 59 mit der Antriebswelle 8 des Werkzeughalters verbunden. Der Antrieb des Halters 57 erfolgt über ein mit der Welle 8 in Verbindung stehendes Zahnradgetriebe, das so ausgelegt ist, dass der Halter 57 gleichsinnig, jedoch mit höherer Geschwindigkeit als die Welle 8 rotiert. Dieses Getriebe ist bei dem dargestellten Ausführungsbeispiel durch die beiden Zahnradpaare 60 dargestellt. Hierbei wird vorzugsweise ein Übersetzungsverhältnis von 1:2 gewählt. Ausser der über das Stellelement 58 einstellbaren Exzentrizität $e_2$ zwischen Abtriebswelle 55 und Antriebswelle 44 ist ferner noch ein Stellelement 61 vorgesehen, durch das die Länge des Kurbelarmes 54 verändert werden kann. Die Stellelemente 58, 61 dienen zur Veränderung der jeweils gewünschten Pascalschen Kurve, während die die gesamte Anordnung in bezug auf die Werkstückdrehachse 48 um das Mass $e_1$ verstellbare Stelleinrichtung 46 sowie die zur Einstellung des Radius r der Werkzeugbahn dienende Verstelleinrichtung 62 der Zuordnung des Werkzeugs zum Um- und Inkreis des zu erzeugenden Profils dient. Hierbei ist die gesamte Anordnung auch in bezug auf das Werkstück in axialer Richtung verschiebbar, so dass entsprechende Profilzylinder gefertigt werden können. Die Kurbelschleife kann hier über das Stellmittel 46 unabhängig verstellt werden, um die Pascalschen Kurven jeweils noch zu verändern.

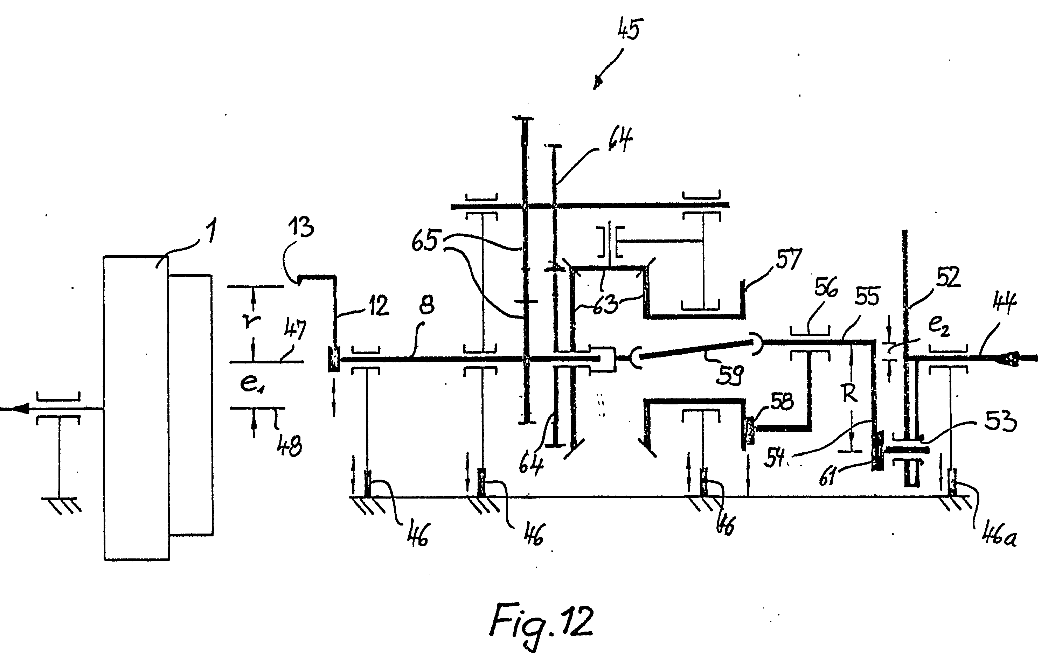

Fig. 12 zeigt die Modifikation des vorstehend beschriebenen Getriebes, das es ermöglicht, als Bewegungsgesetz für die Veränderung der Bahngeschwindigkeit des Werkzeugs 13 eine Ellipse vorzugeben, d.h. dass zur Steuerung der Bahngeschwindigkeit des Werkzeugs die Bahngeschwindigkeit eines Punktes herangezogen wird, der mit im wesentlichen konstanter Winkelgeschwindigkeit eine vorgegebene Ellipsenbahn durchläuft. Der Aufbau dieses Getriebes entspricht weitgehend dem anhand von Fig. 11 beschriebenen Getriebe 45, so dass hier identische Bauteile mit gleichen Bezugszeichen versehen sind. Auch hier ist wieder die gesamte Wellenanordnung in einem Gestell gehalten, das mit einer Verstelleinrichtung 46 in bezug auf die Drehachse 48 der Werkstückaufnahme 1 zur Einstellung der Exzentrizität $e_1$ versehen ist.

Auch bei diesem Getriebe ist mit einer Welle 44, die über ein nicht dargestelltes Vorgelegegetriebe mit dem Antrieb der Werkstückaufnahme 1 in Verbindung steht, so dass hierdurch ein Zusammenlauf zwischen Werkstückaufnahme 1 und Welle 44 gegeben ist, eine Kurbelschleife 52 verbunden, in der ein Gleitstein 53 eines Kurbelarmes 54 gelagert ist. Die Abtriebswelle 55 des Kurbelarmes 54 ist in einer Lagerbüchse 56 gelagert, die an einem als Hohlwelle ausgebildeten drehbar gelagerten Halter 57 über ein Stellelement 58 gehalten ist.

Die Abtriebswelle 55 ist ferner über eine Gelenkwelle 59 verbunden, die jedoch zwei Getriebeanordnungen treibt. Über ein Kegelradgetriebe 63 wird zum einen der Halter 57 der Lagerbüchse 56 für die Abtriebswelle 55 angetrieben und zwar so, das dieser mit der gleichen Drehgeschwindigkeit, jedoch mit entgegengesetzter Drehrichtung wie die Abtriebswelle 55 umläuft.

Die Gelenkwelle 59 treibt ferner ein aus zwei Zahnradpaaren 64, 65 bestehendes Übersetzungsgetriebe an, wobei das Antriebszahnrad des Zahnradpaares 64 starr mit dem Antriebszahnrad des Kegelradgetriebes 63 verbunden ist. Das Abtriebszahnrad des Zahnradpaares 65 ist hierbei mit der Welle 8 fest gekuppelt, so dass die Welle 8 gegenüber der Abtriebswelle 55 mit entsprechend höherer Drehzahl umläuft.

Über Stellelemente 61 kann wiederum die Länge des Kurbelarmes R verstellt werden, während wie vorstehend bereits beschrieben, über das Stellelement 58 die Exzentrizität $e_2$ zwischen Abtriebswelle 55 und der Welle 44 eingestellt werden kann. Über das Stellmittel 46a ergibt sich eine zusätzliche Exzentrizität. Bei allen beschriebenen Getrieben wird das Werkzeug 13 auf einer Kreisbahn geführt, wobei das Drehzahlverhältnis entsprechend der vorgegebenen Polygonkontur eingestellt wird, was nachstehend noch näher beschrieben wird, aber das Werkzeug 13 durchläuft diese Kreisbahn während eines Umlaufes nicht mit konstanter Bahngeschwindigkeit sondern mit einer nach dem durch die Einstellung des Getriebes vorgegebenen Bewegungsgesetzes sich ändernden Bahngeschwindigkeit. Die Getriebe gemäss der Anordnung 4 und 11 geben die Möglichkeit, das Bewegungsgesetz nach Pascalschen Kurven vorzugeben, so dass hier Polygonkonturen auch mit geraden Flanken und scharf ausgezogenen Ecken erzeugt werden können. Die Getriebeanordnung gemäss Fig. 12, die das Bewegungsgesetz nach einer Ellipsenbahn vorgibt, ermöglicht es, Polygonkonturen herzustellen, die abgerundete Ecken und gewölbte Flanken aufweisen.

Bei einer Führung des Werkzeugs entsprechend Fig. 13 ergibt sich die Eckenzahl des zu erzeugenden Polygonprofils durch die Vorgabe des Drehzahlverhältnisses zwischen der Werkstückdrehzahl $n_1$ und der Werkzeugdrehzahl $n_2$ in der Weise, dass $E = n_2/n_1$ ist. Das Drehzahlverhältnis ist ganzzahlig vorzugeben. Bei nicht ganzzahligen Drehzahlverhältnissen ergeben sich in Werkstücklängsrichtung schraubenartig verdrehte Profilverläufe.

Bei einer Werkzeugführung entsprechend Fig. 14 bestimmt sich die Eckenzahl aus der Differenz der Drehzahlen von Werkstück und Werkzeug, so dass gilt Eckenzahl

$$E = \frac{1}{\dfrac{n_2}{n_2} - \dfrac{n_1}{n_2}}$$

Auch bei den Getriebeanordnungen gemäss Fig. 11 und 12 kann der Ausgleich von Unwuchten und Massenträgheitsmomenten mit den anhand von Fig. 4 beschriebenen Mitteln vorgenommen werden.

Die Getriebe gemäss Fig. 11 und 12 können auch in der Weise angewandt werden, dass der Antrieb über die Welle 8 erfolgt, während der Werkzeugträger 12 mit der Welle 44 verbunden wird. Hierbei entstehen Polygonkonturen entsprechend den Fig. 9a, 9b und 9c.

Da die zu erzeugende Polygonkontur aus einer Überlagerung von Drehbewegungen von Werkstück und Werkzeug resultiert, ist es natürlich auch möglich, die Anordnung in der Weise zu treffen, dass die dargestellten Getriebe zur Erzeugung des Bewegungsgesetzes die Werkstückaufnahme 1 antreiben, während das Werkzeug 13 selbst mit konstanter Bahngeschwindigkeit umläuft. Ferner ist es möglich, das erfindungsgemässe Verfahren dahingehend abzuwandeln, dass entsprechend der Erfindung ausgebildete Überlagerungsgetriebe hintereinander geschaltet werden, d.h. über ein zusätzliches Getriebe noch die Werkstückdrehung auf das Werkzeug übertragen wird, so dass es möglich wird, auch an stillstehenden Werkstücken entsprechende Polygonkonturen anzubringen. Dies ist beispielsweise dann vorteilhaft, wenn derartige Polygonkonturen beispielsweise in Form von entsprechenden Ausnehmungen angebracht werden sollen, wobei die Form und/oder Grösse des Werkstücks eine Drehung des Werkstücks selbst nicht zulässt.

Auch bei den Getriebeanordnungen gemäss Fig. 11 und 12 ist die anhand der von Fig. 5, 6 und 7 beschriebene Verdrehung von Schubachse und Überdeckungslager zur Erzeugung unsymmetrischer Polygonkonturen möglich, da entsprechend der mathematischen Vorgabe des Bewegungsgesetzes auf der Basis Pascalscher Kurven der in Fig. 5 angegebene Steg 26 bei dem Getriebe gemäss Fig. 11 der Kurbel 54 entspricht.

Das Verfahren zur Darstellung des Bewegungsgesetzes lässt sich gemäss der Formulierung gemäss Anspruch 5 bzw. Anspruch 8 oder 9 für Epizykloiden, beispielsweise Pascalschen Kurven auch in der Weise beschreiben, dass die Bahngeschwindigkeit des Werkzeugs während eines Umlaufs nach einem Bewegungsgesetz verändert wird, das einer der gewünschten Eckenzahl proportionalen Winkelgeschwindigkeit eines Führungszeigers entspricht, der mit einem ebenfalls rotierenden Leitzeiger geometrisch addiert wird, wobei der Ursprung ortsfest ist und der Leitzeiger gleichsinnig mit höherer Winkelgeschwindigkeit als der Führungszeiger rotiert und der Endpunkt der geometrischen Addition eine Epizykloide beschreibt, wobei ferner der Endpunkt dieser Addition von einem Treibzeiger geführt wird, der mit vorzugsweise konstanter Winkelgeschwindigkeit umläuft.

Für Hypozykloiden, beispielsweise Ellipsen, ergibt sich dann entsprechend, dass die Bahngeschwindigkeit des Werkzeugs während eines Umlaufs nach einem Bewegungsgesetz verändert wird, das einer der gewünschten Eckenzahl proportionalen Winkelgeschwindigkeit eines Führungszeigers entspricht, der mit einem Leitzeiger geometrisch addiert wird, wobei der Ursprung ortsfest ist und der Leitzeiger gegenläufig mit mindestens der gleichen Winkelgeschwindigkeit rotiert wie der Führungszeiger und der Endpunkt der geometrischen Addition eine Hypozykloide beschreibt, wobei der Endpunkt der Addition von einem Treibzeiger geführt wird, der mit vorzugsweise konstanter Winkelgeschwindigkeit umläuft.

In beiden Fällen wird die Bahngeschwindigkeit des Werkzeuges bestimmt von der Winkelgeschwindigkeit der Drehachse des Führungszeigers.

Bei einer Umkehrung der Zeigeranordnung, wenn also der Treibzeiger zum Führungszeiger und der Führungszeiger zum Treibzeiger wird, ergeben sich ebenfalls aus der Überlagerung von Werkstückbewegung und Werkzeugbewegung Polygonkonturen.

Eine derartige Vorrichtung erlaubt auch einen diskontinuierlichen Eingriff des bzw. der Werkzeuge am Werkstück, wie dies beispielsweise vom Schlagdrehfräsen bekannt ist.

Bei den dargestellten und beschriebenen Ausführungsbeispielen sind die Drehachse des Werkstücks einerseits und die Drehachse des Werkzeugs andererseits parallel zueinander ausgerichtet, so dass entsprechend zylindrische Körper mit den gewünschten Polygonquerschnitten hergestellt werden können. Bei entsprechender Ausbildung des Vorgelegegetriebes ist es jedoch auch möglich, die Drehachse der Werkzeugbewegung unter einem Winkel zur Drehachse des Werkstückes einzurichten, so dass bei einer entsprechenden Vorschubbewegung des Werkzeuges in Längsrichtung des Werkstückes auch konische Körper mit entsprechendem Polygonquerschnitt erzeugt werden können.

Da das Werkzeug aufgrund der vorgegebenen Bewegungsgesetze ständig mit dem Werkstück im Eingriff steht, kann die Drehachse des Werkzeuges auch unter 90° zur Drehachse des Werkstückes verlaufen, so dass auf diese Weise in eine Stirnfläche eines beispielsweise zylindrischen Körpers eine Polygonkontur eingearbeitet werden kann.

Als Werkzeug kommen neben stationären Werkzeugen in Form eines Drehmeissels auch rotierende Werkzeuge in Form eines Schleifkörpers oder Fräsers oder Messerkopfes in Betracht. In diesem Falle muss auf dem Werkzeughalter ein entsprechender Drehantrieb, beispielsweise in Form eines Elektromotors, angeordnet werden. Dies bereitet jedoch keine grossen Schwierigkeiten, da aufgrund der translatorischen Kreisbewegung des Werkzeughalters keine Drehübertrager für die Energiezufuhr, sei es elektrisch oder hydraulisch, erforderlich sind.

Anstelle der dargestellten und beschriebenen Getriebeanordnungen können auch andere Räder- und/oder Kurbelgetriebe eingesetzt werden, mit deren Hilfe Pascalsche Kurven dargestellt werden können, damit sich bei entsprechendem Antrieb für das Werkzeug das jeweils gewünschte Bewegungsgesetz ergibt.

Unter Pascalschen Kurven im Sinne der Erfindung sind auch unsymmetrische Kurven zu verstehen, wie sie beispielsweise entstehen, wenn die Schleife des Umlaufrädergetriebes keine geradlinige Führungskontur sondern einen wenigstens teilweise gekrümmten Verlauf aufweist.

Das Verfahren, bzw. die Anordnung kann auch in der Weise abgewandelt werden, dass die Drehung des Werkstückes dadurch ersetzt wird, dass das Werkzeug zusätzlich zu seiner durch das Bewegungsgesetz vorgegebenen Bewegung insgesamt um das Werkstück umläuft.

Anstelle der bevorzugten spanabhebenden Bearbeitung ist in der beschriebenen Weise auch die Führung von Werkzeugen zur Oberflächenbehandlung bereits fertiger Werkstücke mit Polygonkontur, beispielsweise eines Rollierwerkzeuges möglich.

Der Ausgleich der Massenträgheitsmomente kann ausser mit den angegebenen Differentialgetrieben auch durch andere Bauformen bewirkt werden, die eine gegenläufige Bewegung zu den ungleichförmig bewegten Teilen der Vorrichtung ausführen, so beispielsweise auch hydraulisch gesteuerte Massensysteme.

**Patentansprüche**

1. Verfahren zur Herstellung von Werkstücken mit polygonaler Aussen- und/oder Innenkontur, vorzugsweise durch spanabhebende Bearbeitung, wobei das zu bearbeitende Werkstück um eine ortsfeste Drehachse (48) mit konstanter Geschwindigkeit rotiert, während das Werkzeug (13) auf einer Kreisbahn (17; 51) geführt wird, wobei die Drehgeschwindigkeit des Werkstücks und die Umlaufgeschwindigkeit (Bahngeschwindigkeit) des Werkzeuges (13) auf seiner Kreisbahn voneinander abhängig sind und wobei ferner das Werkzeug (13) während des gesamten Umlaufs am Werkstück angreift, wobei zur Erzeugung einer vorgegebenen Polygonkontur die ortsfeste Drehbewegung des Werkstücks und die Bewegung des Werkzeugs (13) auf seiner exzentrisch zur Werkstückdrehachse (48) verlaufenden Kreisbahn (17; 51) überlagert werden, dadurch gekennzeichnet, dass die Bahngeschwindigkeit des Werkzeugs (13) jeweils während eines Umlaufs nach einem periodischen Bewegungsgesetz geändert wird, das durch die vorgegebene Polygonkontur bestimmbar ist und dass zur Erzeugung der periodischen Änderung der Bahngeschwindigkeit des Werkzeuges (13) jeweils während eines Umlaufs auf seiner Kreisbahn (17; 51) die Drehzahl des Antriebs für das Werkzeug (13) über einen mit dem Bewegungsgesetz programmierten Funktionsgeber (39) periodisch geändert wird.

2. Verfahren nach Anspruch 1, dadurch gekennzeichnet, dass bezogen auf die Ausrichtung des Eingriffspunktes am Werkstück das Werkzeug (13) im wesentlichen translatorisch auf seiner exzentrisch zur Werkstückdrehachse (48) verlaufenden Kreisbahn (17) geführt wird, die durch den Umkreis (49) und den Inkreis (50) des zu erzeugenden Polygonprofils begrenzt ist.

3. Verfahren nach Anspruch 1, dadurch gekennzeichnet, dass bezogen auf die Ausrichtung des Eingriffspunktes am Werkstück das Werkzeug (13) auf seiner exzentrisch zur Werkstückdrehachse (48) verlaufenden Kreisbahn (51) umlaufend geführt wird, wobei die Kreisbahn (51) des Werkzeugs (13) das Werkstück umschliesst und den Umkreis (49) und den Inkreis (50) des zu erzeugenden Profils tangiert.

4. Verfahren nach Anspruch 1, 2 oder 3, dadurch gekennzeichnet, dass das Werkzeug auf einer Kreiszylinderbahn geführt wird.

5. Verfahren nach einem der Ansprüche 1, 2, 3 oder 4, dadurch gekennzeichnet, dass das Bewegungsgesetz für die Bahngeschwindigkeit des Werkzeugs (13) jeweils während eines Umlaufs auf seiner Kreisbahn (17; 51) definiert ist durch die sich ändernde Winkelgeschwindigkeit des Mittelpunktes eines Kreises, der ohne zu gleiten auf der Aussenseite eines feststehenden Kreises mit gleichem Durchmesser abrollt, wobei die Winkelgeschwindigkeit auf den Mittelpunkt des feststehenden Kreises bezogen ist, wobei ferner ein dem umlaufenden Kreis fest zugeordneter zweiter Punkt, der bei dem Umlauf des abrollenden Kreises eine Pascalsche Kurve beschreibt, mit im wesentlichen konstanter Winkelgeschwindigkeit um einen innerhalb der Pascalschen Kurve liegenden Drehpunkt geführt wird.

6. Verfahren nach Anspruch 5, dadurch gekennzeichnet, dass die periodische Änderung der Bahngeschwindigkeit des Werkzeuges (13) jeweils während eines Umlaufs auf seiner Kreisbahn (17; 51) mittels eines nach Pascalschen Kurven steuerbaren mechanischen Umlaufrad-Schleifen-Getriebes (21) bewirkt wird und dass zur Erzeugung unsymmetrischer Polygonkonturen die Schleife (22) des Getriebes (21) unter einem Winkel zu der durch die translatorische Bewegung des Werkzeugs vorgegebenen Schubachse (18) in der Überdeckungslage eingestellt werden.

7. Verfahren nach Anspruch 1, 2, 3 oder 4, dadurch gekennzeichnet, dass das Bewegungsgesetz für die Bahngeschwindigkeit des Werkzeugs (13) jeweils während eines Umlaufs definiert ist durch die sich ändernde Winkelgeschwindigkeit der Drehachse eines Kurbelarmes, die ihrerseits auf einer Kreisbahn mit höherer Winkelgeschwindigkeit aber gleicher Drehrichtung umläuft, wobei die Winkelgeschwindigkeit des Umlaufs der Drehachse auf der Kreisbahn von der Winkelgeschwindigkeit der Drehung der Drehachse selbst abhängig ist und dass der Kurbelzapfen von einer mit konstanter Winkelgeschwindigkeit umlaufenden Schleife angetrieben wird, deren Drehachse mit der Drehachse der Kreisbahn der Drehachse des Kurbelarmes zusammenfällt oder radial dazu verschoben ist.

8. Verfahren nach Anspruch 1, 2, 3, oder 4, dadurch gekennzeichnet, dass das Bewegungsgesetz zur Änderung der Bahngeschwindigkeit des Werkzeugs jeweils während eines Umlaufs einem ganzzahligen Vielfachen der Winkelgeschwindigkeit der Drehachse eines Kurbelarmes entspricht, die ihrerseits auf einer Kreisbahn mit gleicher Winkelgeschwindigkeit aber gegenläufiger Drehrichtung umläuft, wobei die Winkelgeschwindigkeit des Umlaufs der Drehachse auf der Kreisbahn von der Winkelgeschwindigkeit der Drehung der Drehachse selbst abhängig ist, und dass der Kurbelzapfen von einer mit konstanter Winkelgeschwindigkeit umlaufenden Schleife angetrieben wird, deren Drehachse mit der Drehachse der Kreisbahn der Drehachse des Kurbelarmes zusammenfällt oder radial dazu verschoben ist.

9. Verfahren nach Anspruch 8, dadurch gekennzeichnet, dass die Bahngeschwindigkeit des Werkzeugs (13) während eines Umlaufs auf seiner Bahn mittels eines nach Ellipsen steuerbaren Getriebes verändert wird.

10. Vorrichtung zur Herstellung von Werkstücken mit polygonaler Aussen- und/oder Innenkontur, insbesondere durch spanabhebende Bearbeitung nach dem Verfahren gemäss den Ansprüchen 1 bis 9, mit einer drehbar gelagerten, angetriebenen Werkstückaufnahme (1) und einem Werkzeug (13), das entlang einer geschlossenen Kreisbahn (17; 51) geführt ist und mit dem Antrieb (2) der Werkstückaufnahme (1) in Verbindung steht, dadurch gekennzeichnet, dass der rotierende Träger (9) für den Werkzeughalter (12) mit einem über die für die zu erzeugende Polygonkontur vorgegebene, das Bewegungsgesetz bestimmende Steuerfunktion ansteuerbaren Antrieb (21; 41) verbunden ist.

11. Vorrichtung nach Anspruch 10, dadurch gekennzeichnet, dass als steuerbarer Antrieb (21) für den Träger (9) des Werkzeughalters (12) zwischen Antriebsmotor (2) und Träger (9) ein nach Pascalschen Kurven steuerbares Getriebe (21) zwischengeschaltet ist.

12. Vorrichtung nach Anspruch 11, dadurch ge210kennzeichnet, dass das nach Pascalschen Kurven steuerbare Getriebe (21) durch einen Umlaufrädertrieb mit einer Schleife (22) gebildet wird, die über einen Kurbelzapfen (24) mit dem Umlaufrad (25) verbunden ist, wobei die Schleife (22) den antreibenden Getriebeteil und der Steg (26) des Umlaufrades den Abtrieb bildet, der mit der Welle (8) des Trägers (9) für den Werkzeughalter (12) verbunden ist, wobei die Drehachse des Trägers (9) mit der Drehachse des Steges (26) identisch ist.

13. Vorrichtung nach den Ansprüchen 10 bis 12, dadurch gekennzeichnet, dass bei einer translatorischen Bewegung der Kreisbahn (17) des Werkzeuges (13) die Schubachse (18) der Bewegung des Werkzeuges (13) und die Überdeckungslage (29) von Schleife (22) und Umlaufradsteg (26) in einer Ebene liegen und die Überdeckungslage (29) der Schleife (22) gegenüber der Schubachse (18) unter einem Winkel hierzu einstellbar ist.

14. Vorrichtung nach Anspruch 12 oder 13, dadurch gekennzeichnet, dass die Drehachse (30) der Schleife (22) exzentrisch zur Drehachse (8) des Steges (26) einstellbar ist.

15. Vorrichtung nach Anspruch 12, 13 oder 14, dadurch gekennzeichnet, dass der dem Umlaufrad (25) zugeordnete Kurbelzapfen (24) in bezug auf das Umlaufrad (25) verschieb- und feststellbar ausgebildet ist.

16. Vorrichtung nach einem der Ansprüche 12 bis 15, dadurch gekennzeichnet, dass eine Kupplung (28) vorgesehen ist, durch die der Träger (9) für den Werkzeughalter (12) vom Steg (26) des Umlaufrades (25) getrennt und mit der Antriebswelle der Schleife verbindbar ist.

17. Vorrichtung nach einem der Ansprüche 12 bis 16, dadurch gekennzeichnet, dass das Polrad des als Umlaufrädergetriebe ausgebildeten Getriebes (21) zusätzlich in Abhängigkeit vom Werkzeugvorschub angetrieben wird.

18. Vorrichtung nach einem der Ansprüche 10 bis 17, dadurch gekennzeichnet, dass zum Ausgleich der Massenträgheitsmomente, die durch die sich jeweils während eines Umlaufs ändernde Bahngeschwindigkeit des Werkzeugs auftreten, das Getriebe (21) mit einem Differentialgetriebe (32) verbunden ist, das eine Schwungmasse (37) antreibt.

19. Vorrichtung nach Anspruch 18, dadurch gekennzeichnet, dass das Differentialgetriebe (32) zum Antrieb der Schwungmasse (37) ein Planetengetriebe ist, wobei die Schleife (22) den Planetenradträger (33) antreibt, das Sonnenrad (34) mit der Welle (8) des Trägers (9) für den Werkzeughalter (12) verbunden ist, und das mit dem Planetenrad (36) im Eingriff stehende Gegenrad (35) koaxial zum Sonnenrad (34) gelagert ist und die Schwungmasse (37) trägt.

20. Vorrichtung nach einem der Ansprüche 12 bis 19, dadurch gekennzeichnet, dass die Drehachse (8) des Trägers (9) für den Werkzeughalter (12) unter einem Winkel zur Drehachse der Werkstückaufnahme (1) einstellbar ist, wie an sich bekannt.

21. Vorrichtung nach einem der Ansprüche 10 bis 20, dadurch gekennzeichnet, dass das nach Pascalschen Kurven steuerbare Getriebe (21) durch eine umlaufende Kurbelschleife gebildet wird, wobei die Kurbelschleife den antreibenden Getriebeteil und die Kurbel der Abtrieb bildet, dass die Antriebswelle (55) der Kurbel (54) in einer exzentrisch zur Drehachse (44) der Kurbelschleife (52) angeordneten und gleichsinnig umlaufenden Lagerbüchse (56) gelagert ist, dass die Lagerbüchse (56) über ein Übersetzungsgetriebe (45) mit der Abtriebswelle (55) der Kurbel (54) verbunden ist und dass die Abtriebswelle (55) mit dem drehbar gelagerten Werkzeugträger (12) in Verbindung steht (Fig. 11).

22. Vorrichtung nach Anspruch 10 zur Durchführung des Verfahrens nach den Ansprüchen 1 bis 4, 8 oder 9, dadurch gekennzeichnet, dass als steuerbarer Antrieb für den Träger (9) des Werkzeughalters (12) zwischen Antriebsmotor (2) und Träger (9) ein nach Ellipsen steuerbares Getriebe zwischengeschaltet ist.

23. Vorrichtung nach Anspruch 22, dadurch gekennzeichnet, dass das nach Ellipsen steuerbare Getriebe durch eine umlaufende Kurbelschleife (52) gebildet wird, wobei die Kurbelschleife (52) den antreibenden Getriebeteil und die Kurbel (54) den Abtrieb bildet, dass die Abtriebswelle (55) der Kurbel (54) in einer exzentrisch zur Drehachse der Schleife (52) angeordneten und gegenläufig umlaufenden Lagerbüchse (56) gelagert ist, dass die Lagerbüchse (56) über ein Getriebe (63) zur Drehrichtungsumkehr mit der Abtriebswelle (55) der Kurbel (54) verbunden ist und dass die Abtriebswelle (55) gleichzeitig über ein Übersetzungsgetriebe (64, 65) mit dem drehbar gelagerten Werkzeugträger (12) in Verbindung steht (Fig. 12).

24. Vorrichtung nach den Ansprüchen 10 bis 23 mit translatorischer Kreisbewegung des Werkzeuges (13), das über einen Lagerblock (10) an einem rotierenden Träger (9) exzentrisch zu dessen Drehachse und relativ zu diesem drehbar gehalten ist, dadurch gekennzeichnet, dass der Lagerblock (10) nur eine Drehachse aufweist und mit einer Momentenstütze (14) am Gestell abgestützt ist.

25. Vorrichtung nach Anspruch 24, dadurch gekennzeichnet, dass der Lagerblock (10) zur Einstellung der Exzentrizität auf dem Träger (9) im wesentlichen radial verschieb- und feststellbar gehalten ist.

26. Vorrichtung nach Anspruch 24 oder 25, dadurch gekennzeichnet, dass Werkzeughalter (12) und Momentenstütze (14) ein Kurbelgetriebe, insbesondere ein Parallel-Kurbelgetriebe bilden.

27. Vorrichtung nach Anspruch 24 oder 25, dadurch gekennzeichnet, dass die Momentenstütze (14) als Schwenkarm mit Linearführung (19) ausgebildet ist.

**Claims**

1. Process for the manufacture of workpieces with polygonal outside and/or inside contour, preferably by machining, where the workpiece to be machined rotates around a fixed axis of rotation (48) at constant speed while the tool (13) is guided along a circular track (17, 51), where the speed of rotation of the tool and the rotational speed (track speed) of the tool on its circular track depend on one another and further where the tool (13) attacks the workpiece during the whole rotation, where in order to produce a given polygonal contour, the fixed rotary movement of the workpiece and the movement of the tool (13) on its circular track (17, 51) eccentric to the workpiece axis of rotation (48) are superimposed, characterised by the fact that the track speed of the tool (13) during one rotation is changed by a periodic movement law, which can be determined by the given polygonal contour and that to produce the periodic change of the track speed of the tool (13) during one rotation on its circular track (17, 51), the drive speed for the tool (13) is periodically changed by a function transmitter (39) programmed with the movement law.

2. Process according to claim 1, characterised by the fact that relative to the direction of the point of attack at the workpiece, the tool (13) is guided in a translatory way on its circular track (17) eccentric to the workpiece axis of rotation (48), which track is limited by the circumscribed circle (49) and the inscribed circle (50).

3. Process according to claim 1, characterised by the fact that relative to the direction of the point of attack at the workpiece, the tool (13) rotates on its circular track (51) eccentric to the workpiece axis of rotation (48), where the circular track (51) of the tool (13) surrounds the workpiece and is tangential to the circumscribed circle (49) and the inscribed circle (50) of the profile to be produced.

4. Process according to claim 1, 2 or 3, characterised by the fact that the tool is guided on a circular cylindrical track.

5. Process according to one of claims 1, 2, 3 or 4, characterised by the fact that the movement law for the track speed of the tool (13) is always defined during rotation on its circular track (15, 17) by the changing angular velocity of the centre point of a circle which, without sliding, rolls on the outside of a fixed circle of the same diameter, where the angular velocity is relative to the centre point of the fixed circle, where further a second point fixedly allocated to the rotating circle, which describes a Pascal curve during the rotation of the rolling circle is guided at a largely constant angular velocity around a point of rotation lying inside the Pascal curve.

6. Process according to claim 5, characterised by the fact that the periodic change of the track speed of the tool (13) always occurs during one rotation on its track (17, 51) by means of a mechanical planet wheel guide gearbox (21) which can be controlled along a Pascal curve and that, in order to produce asymmetrical polygonal contours, the guide (22) of the gearbox (21) is set at an angle of the feed axis (18) given by the translatory movement of the tool in the overlapping position.

7. Process according to claims 1, 2, 3 or 4, characterised by the fact that the movement law for the track speed of the tool (13) is defined during one rotation by the changing angular velocity of the axis of rotation of a crank arm, which in turn rotates in the same direction of rotation with higher angular velocity on a track, where the angular velocity of rotation of the axis of rotation on the circular track depends on the angular velocity of the rotation of the axis of rotation itself and that the crankshaft is driven by a curve rotating with constant angular velocity, whose axis of rotation coincides with the axis of rotation of the circular track of the axis of rotation of the crank arm, or is radially displaced relative to it.

8. Process according to claims 1, 2, 3 or 4, characterised by the fact that the movement law for changing the track speed of the tool during one rotation always corresponds to a whole number multiple of the angular velocity of the axis of rotation of a crank arm, which in turn rotates on a circular track with the same angular velocity but in the opposite direction of rotation, where the angular velocity of rotation of the axis of rotation on the circular track depends on the angular velocity of rotation of the axis of rotation itself and that the crankshaft is driven by a guide rotating at constant angular velocity, whose axis of rotation coincides with the axis of rotation of the circular track of the axis of rotation of the crank arm or is radially displaced relative to it.

9. Process according to claim 8, characterised by the fact that the track speed of the tool (13) during one rotation on its track is changed by a gearbox which can be controlled on ellipses.

10. Process for the manufacture of workpieces with polygonal outside and/or inside contour, particularly by machining according to the process in accordance with claims 1 to 9, with a driven workpiece holding fixture (1) which can rotate and a tool (13) which is guided along a closed circular track (17, 51) and is connected to the drive (2) of the workpiece holding fixture (1), characterised by the fact that the rotating support (9) for the workpiece holder (12) is connected to a controlled drive (21, 41) of the control function determining the movement law given for the polygonal contour to be produced.

11. Device according to claim 10, characterised by the fact that a gearbox (21) which can be controlled along a Pascal curve is interposed as a controlled drive (21) for the support (9) of the tool holder (12) between the drive motor (2) and the support (9).

12. Device according to claim 11, characterised by the fact that the gearbox (21) controllable along the Pascal curve is formed by a planet wheel drive with a guide (22), which is connected to the planet wheel (25) via a crankshaft (24), where the guide (22) of the driving gearbox part and the bar (26) of the planet wheel form the driven part which is connected to shaft (8) of the support (9) for the tool holder (12), where the axis of rotation of the support (9) is identical to the axis of rotation of bar (26).

13. Device according to claims 10 to 12, characterised by the fact that for a translatory movement of the circular track (17) of tool (13), the feed axis (18) of the tool movement (13) and the overlapping position (29) of guide (22) and planet wheel bar (26) are in one plane and the overlapping position (29) of the guide can be set at an angle to the feed axis (18).

14. Device according to claim 12 or 13, characterised by the fact that the axis of rotation (30) of guide (22) can be set eccentrically to the axis of rotation (8) of the bar (26).

15. Device according to claim 12, 13 or 14, characterised by the fact that the crankshaft (24) assigned to the planet wheel (25) is made movable and able to be fixed relative to the planet wheel (25).

16. Device according to one of claims 12 to 15, characterized by the fact that a clutch (28) is provided by the support (9) for the tool holder (12) is separated from bar (26) of the planet wheel (25) and can be connected to the drive shaft of the curve.

17. Device according to one of claims 12 to 16, characterised by the fact that the cogwheel of the gearbox (21) made as a planet wheel gearbox is also driven depending on the tool feed.

18. Device according to one of claims 10 to 17, characterised by the fact that in order to balance the mass moments of insertia, which occur due to the changing track speed of the tool during one rotation, the gearbox (21) is connected to a differential gearbox (32), which drives a balance weight (37).

19. Device according to claim 18, characterised by the fact that the differential gearbox (32) for driving the balance weight (37) is a planetary gearbox, where the guide (22) drives the planet wheel support (33), the sun wheel (34) is connected to the shaft (8) of the support (9) for the tool holder (12) and the counterwheel (35) engaging with planet wheel (36) is supported coaxially with the sun wheel (34) and carries the balance weight (37).

20. Device according to one of claims 2 to 19, characterised by the fact that the axis of rotation (8) of the support (9) for the tool holder (12) can be set at an angle to the axis of rotation of the workpiece holding fixture, as is known.

21. Device according to one of claims 10 to 20, characterised by the fact that the gearbox (21) controllable along the Pascal curve is formed by a rotating crank guide, where the crank guide forms the driving part of the gearbox and the crank of the driven part, that the drive shaft (55) of crank (54) is supported in a bearing bush (56) rotating in the same direction and situated eccentrically to the axis of rotation (44) of the crank guide (52), that the bearing bush (56) is connected via a transmission gearbox (45) to the driven shaft (55) of crank (54) and that the driven shaft (55) is connected to the tool holder (12), which can rotate (Fig. 11).

22. Device according to claim 10 for carrying out the process according to claims 1 to 4, 8 or 9, characterised by the fact that a gearbox which can be controlled in ellipses is interposed as a controllable drive for the support (9) of tool holder (12) between the drive motor (2) and support (9).

23. Device according to claim 22, characterised by the fact that the gearbox which can be controlled in ellipses is formed by a rotating crank guide (52), where the crank guide (52) forms the driving part of the gearbox and the crank (54) the driven part, that the driven shaft (55) of crank (54) is supported in a bearing bush (56) rotating in the opposite direction and arranged eccentrically to the axis of rotation of guide (52), that the bearing bush (56) is connected via a gearbox (63) for reversing direction of rotation to the driven shaft (55) of crank (54) and that the driven shaft (55) is simultaneously connected via a transmission gearbox (64, 65) to the tool support (12) which can rotate (Fig. 12).

24. Device according to claims 10 to 23 with translatory circular movement of the tool (13), which can rotate via a bearing block (10) on a rotating carrier (9) and eccentrically to its axis of rotation, characterised by the fact that the bearing block (10) only has one axis of rotation and is supported on the frame by a torque stay rod (14).

25. Device according to claim 24, characterised by the fact that the bearing block (10) is kept movable and able to be fixed radially on the support (9) by setting the eccentricity.

26. Device according to claims 24 or 25, characterised by the fact that the tool holder (12) and torque stay rod (14) form a crank drive, particularly a parallel crank drive.

27. Device according to claim 24 or 25, characterised by the fact that the torque stay rod (14) is made as a rotating arm with linear guide (19).

**Revendications**

1. Procédé de fabrication de pièces à contour extérieur et/ou intérieur polygonal, de préférence par usinage avec enlèvement de copeaux, dans lequel la pièce à usiner tourne à vitesse constante autour d'un axe de rotation (48) fixe en position, tandis que l'outil (13) est guidé sur un trajet circulaire (17; 51) dans lequel la vitesse de rotation de la pièce à usiner et la vitesse de parcours de l'outil (13) sur son trajet circulaire (vitesse de l'outil sur son trajet) sont fonction l'une de l'autre, et dans lequel en outre, durant tout son parcours sur son trajet, l'outil (13) reste en contact avec la pièce à usiner; dans lequel, pour obtenir un contour polygonal prescrit, il y a superposition du mouvement de rotation, fixe dans l'espace, de la pièce à usiner et du mouvement de l'outil (13) sur son trajet circulaire (17; 51), excentrique par rapport à l'axe de rotation (48) de la pièce à usiner, caractérisé en ce que l'on modifie respectivement la vitesse de l'outil (13) sur son trajet, pendant son parcours sur ce trajet, en fonction d'une loi périodique de mouvement, que l'on peut déterminer suivant le contour polygonal prescrit; et en ce que, pour obtenir la modification périodique de la vitesse de l'outil (13) sur son trajet, on modifie respectivement périodiquement, pendant le parcours de l'outil sur son trajet circulaire (17; 51), la vitesse de rotation du mécanisme d'entrainement de l'outil (13) par l'intermédiaire d'un émetteur de fonction (39) programmé avec la loi du mouvement.

2. Procédé selon la revendication 1, caractérisé en ce que, concernant l'orientation de son point de contact avec la pièce à usiner, l'outil (13) est essentiellement guidé dans un mouvement de translation sur son trajet circulaire (17) qui est excentrique par rapport à l'axe de rotation (48) de la pièce à usiner et qui est limité par le cercle circonscrit (49) et par le cercle inscrit (50) du profil polygonal à obtenir.

3. Procédé selon la revendication 1, caractérisé en ce que, concernant l'orientation de son point de contact avec la pièce à usiner, l'outil (13) est guidé dans un mouvement de rotation sur son trajet circulaire (51), excentrique par rapport à l'axe de rotation (48) de la pièce à usiner, étant précisé que le trajet circulaire (51) de l'outil (13) entoure la pièce à usiner et tangente le cercle circonscrit (49) et le cercle inscrit (50) du profil à obtenir.

4. Procédé selon la revendication 1, 2 ou 3, caractérisé en ce que l'outil est guidé sur un trajet cylindrique circulaire.

5. Procédé selon l'une des revendications 1, 2, 3 ou 4, caractérisé en ce que la loi du mouvement pour la vitesse de l'outil (13) sur son trajet est respectivement définie, pendant un parcours de l'outil sur son trajet circulaire (17; 51), par la vitesse angulaire changeante du centre d'un cercle qui roule sans glisser sur le périmètre extérieur d'un cercle fixe de même diamètre, étant précisé que la vitesse angulaire est rapportée au centre du cercle fixe, étant précisé en outre qu'un second point, qui est fixe sur le cercle qui roule et qui décrit une courbe de Pascal lors du parcours du cercle qui roule, est guidé, à vitesse angulaire essentiellement constante, autour d'un point de rotation situé à l'intérieur de la courbe de Pascal.

6. Procédé selon la revendication 5, caractérisé en ce que l'on opère respectivement le changement périodique de la vitesse de l'outil (13) sur son trajet circulaire (17; 51), pendant un parcours de l'outil sur ce trajet, au moyen d'un mécanisme à satellite et à glissière (21) qui peut être commandé selon des courbes de Pascal; et en ce que, pour obtenir des contours polygonaux non symétriques, on place la glissière (22) du mécanisme (21), dans la position de superposition, sous un certain angle par rapport à l'axe d'avance (18) prescrit par le mouvement de translation de l'outil.

7. Procédé selon la revendication 1, 2, 3 ou 4, caractérisé en ce que la loi du mouvement pour la vitesse de l'outil (13) sur son trajet est respectivement définie, pendant un parcours sur ce trajet, par la vitesse angulaire changeante de l'axe de rotation d'un bras de manivelle qui, de son côté, parcourt un trajet circulaire à vitesse angulaire plus élevée, mais de même sens de rotation, étant précisé que la vitesse angulaire du parcours de l'axe de rotation sur son trajet circulaire est fonction de la vitesse angulaire de rotation de l'axe de rotation lui-même; et en ce que le maneton de manivelle est entrainé par une glissière qui tourne à vitesse angulaire constante et dont l'axe de rotation coïncide avec l'axe de rotation du trajet circulaire de l'axe de rotation du bras de manivelle ou bien est décalé radialement par rapport à cet axe.

8. Procédé selon la revendication 1, 2, 3 ou 4, caractérisé en ce que la loi du mouvement pour modifier la vitesse de l'outil sur son trajet correspond respectivement, pendant un parcours de l'outil sur son trajet, à un multiple entier de la vitesse angulaire de l'axe de rotation d'un bras de manivelle, axe qui, de son côté, tourne sur un trajet circulaire à la même vitesse angulaire mais dans le sens de rotation opposé, étant précisé que la vitesse angulaire du parcours de l'axe de rotation sur son trajet circulaire est fonction de la vitesse angulaire de rotation de l'axe de rotation lui-même; et en ce que le maneton de manivelle est entrainé par une glissière qui tourne à vitesse angulaire constante et dont l'axe de rotation coïncide avec l'axe de rotation du trajet circulaire de l'axe de rotation du bras de manivelle ou bien est décalé radialement par rapport à cet axe.

9. Procédé selon la revendication 8, caractérisé en ce que l'on modifie la vitesse de l'outil (13) sur son trajet, pendant un parcours sur ce trajet, au moyen d'un mécanisme qui peut se commander suivant des ellipses.

10. Dispositif de fabrication de pièces à contour extérieur et/ou intérieur polygonal, en particulier par usinage avec enlèvement de copeaux selon le procédé des revendications 1 à 9, comportant un mandrin (1) de réception de la pièce à usiner, monté rotatif et entraîné en rotation ainsi qu'un outil (13) qui est guidé le long d'un trajet circulaire fermé (17; 51) et qui est en liaison avec le mécanisme d'entraînement (2) du mandrin (1) de réception de la pièce à usiner, caractérisé en ce que le support tournant (9) du porte-outil (12) est lié à un mécanisme d'entraînement (21; 41) qui peut être commandé par l'intermédiaire de la fonction de commande qui est prescrite pour le contour polygonal à obtenir et qui définit la loi du mouvement.

11. Dispositif selon la revendication 10, caractérisé en ce que comme mécanisme d'entraînement (21) pouvant être commandé pour le support (9) du porte-outil (12), on interpose entre le moteur d'entraînement (2) et le support (9) un mécanisme (21) qui peut être commandé selon des courbes de Pascal.

12. Dispositif selon la revendication 11, caractérisé en ce que le mécanisme (21) qui peut être commandé selon des courbes de Pascal est formé par un mécanisme à satellite avec une glissière (22) qui est reliée, par l'intermédiaire d'un maneton de manivelle (24), au pignon satellite (25), étant précisé que la glissière (22) constitue la partie menante du mécanisme et que la cage (26) du pignon satellite en constitue la partie menée qui est reliée à l'arbre (8) du support (9) du porte-outil (12), étant précisé que l'axe de rotation du support (9) est identique à l'axe de rotation de la cage (26).

13. Dispositif selon les revendications 10 à 12, caractérisé en ce que, dans le cas d'un mouvement de translation du trajet circulaire (17) de l'outil (13), l'axe d'avance (18) du mouvement de l'outil (13) et la position de superposition (29) de la glissière (22) et de la cage (26) du pignon satellite sont dans un même plan et que l'on peut placer la position de superposition (29) de la glissière (22) sous un certain angle par rapport à l'axe d'avance (18).

14. Dispositif selon la revendication 12 ou 13, caractérisé en ce que l'on peut placer excentriquement l'axe de rotation (30) de la glissière (22) par rapport à l'axe de rotation (8) de la cage (26).

15. Dispositif selon la revendication 12, 13 ou 14, caractérisé en ce que le maneton de manivelle (24) correspondant au pignon satellite (25) est conçu avec possibilité de coulisser par rapport au pignon satellite (25) et d'être bloqué.

16. Dispositif selon l'une des revendications 12 à 15, caractérisé en ce qu'il est prévu un accouplement (28) au moyen duquel le support (9) du porte-outil (12) est désolidarisé d'avec la cage (26) du pignon satellite (25) et peut être relié avec l'arbre d'entraînement de la glissière.

17. Dispositif selon l'une des revendications 12 à 16, caractérisé en ce que la roue polaire du mécanisme (21) conçu sous forme de mécanisme à satellite est en outre entraînée en fonction de l'avance de l'outil.

18. Dispositif selon l'une des revendications 10 à 17, caractérisé en ce que pour compenser les moments d'inertie de masse, qui apparaissent du fait que la vitesse de l'outil sur son trajet change respectivement pendant son parcours, le mécanisme (21) est relié à un mécanisme différentiel (32) qui entraîne une masse centrifuge (37).

19. Dispositif selon la revendication 18, caractérisé en ce que le mécanisme différentiel (32) pour l'entraînement de la masse centrifuge (37) est un mécanisme à satellite, étant précisé que c'est la glissière (22) qui entraîne la cage porte-satellite (33), que le planétaire (34) est relié avec l'arbre (8) du support (9) du porte-outil (12), et que le pignon (35) opposé au pignon planétaire et qui engrène avec le pignon satellite (36) est coaxial au pignon planétaire (34) et porte la masse centrifuge (37).

20. Dispositif selon l'une des revendications 12 à 19, caractérisé en ce que l'on peut placer l'axe de rotation (8) du support (9) du porte-outil (12) sous un certain angle par rapport à l'axe de rotation du mandrin (1) de réception de la pièce à usiner, comme cela est connu en soi.

21. Dispositif selon l'une des revendications 10 à 20, caractérisé en ce que le mécanisme (21) que l'on peut commander selon des courbes de Pascal est formé par une glissière-manivelle tournante, la glissière constituant la partie menante du mécanisme et la manivelle la partie menée; en ce que l'arbre mené (55) de la manivelle (54) tourillonne dans un coussinet (56) qui est disposé excentriquement par rapport à l'axe de rotation (44) de la glissière-manivelle (52) et qui tourne dans le même sens; en ce que le coussinet (56) est relié à l'arbre mené (55) de la manivelle (54) par l'intermédiaire d'un mécanisme de changement de vitesse de rotation (54); et en ce que l'arbre mené (55) est relié au porte-outil (12) tournant (figure 11).

22. Dispositif selon la revendication 10, pour la mise en œuvre du procédé selon les revendications 1 à 4, 8 ou 9, caractérisé en ce que, comme entraînement pouvant être commandé pour le support (9) du porte-outil (12), – un mécanisme qui peut être commandé selon des ellipses – est interposé entre le moteur d'entraînement (2) et le support (9).

23. Dispositif selon la revendication 22, caractérisé en ce que le mécanisme qui peut être commandé selon des ellipses est constitué d'une glissière-manivelle tournante (52), étant précisé que la glissière (52) constitue la partie menante du mécanisme et la manivelle (54) la partie menée; en ce que l'arbre mené (55) de la manivelle (54) tourillonne dans un coussinet (56) qui est disposé excentriquement par rapport à l'axe de rotation de la glissière (52) et qui tourne en sens opposé; en ce que le coussinet (56) est relié à l'arbre mené (55) de la manivelle (54) par l'intermédiaire d'un mécanisme (63) d'inversion du sens de rotation; et en ce que l'arbre mené (55) est simultanément relié, par l'intermédiaire d'un mécanisme de changement de vitesse de rotation (64, 65), au porte-outil tournant (12) (figure 12).

24. Dispositif selon les revendications 10 à 23 avec mouvement circulaire de translation de l'outil (13) qui est maintenu, par l'intermédiaire d'un bloc-palier (10) sur un support tournant (9), excentriquement par rapport à l'axe de rotation de ce support, et qui peut tourner par rapport à ce support, caractérisé en ce que le bloc-palier (10) ne présente qu'un axe de rotation et qu'il s'appuie sur le bâti par un appui en rotation (14).

25. Dispositif selon la revendication 24, caractérisé en ce que, pour permettre le réglage de l'excentricité, le bloc-palier (10) est essentiellement maintenu sur le support (9) avec possibilité de coulisser radialement et d'être bloqué.

26. Dispositif selon la revendication 24 ou 25, caractérisé en ce que le porte-outil (12) et l'appui en rotation (14) constituent un mécanisme bielle-manivelle, en particulier un mécanisme bielle-manivelle à déplacement parallèle.

27. Dispositif selon la revendication 24 ou 25, caractérisé en ce que l'appui en rotation (14) est conçu sous forme de bras oscillant à guidage linéaire (19).

Fig3

Fig.2

Fig.1

0 097 346

Fig. 14

Fig.5

Fig.6

Fig.7

Fig. 8

# Fig.9

0 097 346

Fig. 10

Fig. 11

0 097 346

Fig.12

Fig. 14

Fig. 13